# EUROPÄISCHE PATENTSCHRIFT

(11) **EP 3 452 427 B1**
(45) Veröffentlichungstag und Bekanntmachung des Hinweises auf die Patenterteilung: **04.03.2020**
(21) Anmeldenummer: 17719578.1
(22) Anmeldetag: 25.04.2017
(51) Int. Cl.: C04B 28/02

(54) **SELBSTKÜHLENDE KOMPOSITMATERIALIEN**
SELF-COOLING COMPOSITE MATERIALS
MATERIAUX COMPOSITES AUTO-REFROIDISSANT

(30) Priorität: 04.05.2016 EP 16168438
(43) Veröffentlichungstag der Anmeldung: 13.03.2019
(73) Patentinhaber: BASF SE, 67056 Ludwigshafen (DE)
(72) Erfinder: BRUCHMANN, Bernd, 67056 Ludwigshafen (DE); FEICHTENSCHLAGER, Bernhard, 83308 Trostberg (DE); SCHUETTE, Markus, 49448 Lemfoerde (DE); ALBRECHT, Gerhard, 83209 Prien a. Chiemsee (DE); KASPER, Patrick, 79350 Sexau (DE); MUELHAUPT, Rolf, 79104 Freiburg (DE); GUPTA, Anoop, 83308 Trostberg (DE); GUENTHER, Eva, 83308 Trostberg (DE)
(86) Internationale Anmeldenummer: PCT/EP2017/059808
(87) Internationale Veröffentlichungsnummer: WO 2017/190988

(56) Entgegenhaltungen:
- US-A1- 2015 291 868
- A. C. C. ROTZETTER ET AL: "Thermoresponsive Polymer Induced Sweating Surfaces as an Efficient Way to Passively Cool Buildings", ADVANCED MATERIALS, Bd. 24, Nr. 39, 9. Oktober 2012 (2012-10-09), Seiten 5352-5356, XP055299793, DE ISSN: 0935-9648, DOI: 10.1002/adma.201202574

## Beschreibung

Die vorliegende Erfindung betrifft ein Kompositmaterial, das mindestens ein thermoresponsives Polymer und mindestens einen anorganischen Baustoff enthält. Des Weiteren betrifft die vorliegende Erfindung ein Verfahren zur Herstellung des Kompositmaterials sowie die Verwendung des Kompositmaterials zur Kühlung und zur Regelung der Luftfeuchte.

Insbesondere in Regionen mit hohen Tagestemperaturen und hoher Sonneneinstrahlung besteht Bedarf, Häuser zu kühlen, so dass für Menschen eine angenehme Umgebung geschaffen werden kann. Die konventionelle Kühlung mittels Klimaanlagen führt häufig zu hohem Energieverbrauch. Da insbesondere aufgrund der globalen Erwärmung das Einsparen von Energie ein wichtiges Ziel ist, besteht daher Bedarf an weniger energieverbrauchenden Kühlmethoden. Weiterhin hat ein Kühlsystem, das unabhängig von elektrischer Energie funktioniert, den Vorteil, dass es Betriebssicherheit gewährleistet. Anlagen, bei denen Betriebssicherheit wichtig ist, sind zum Beispiel Warenlager, Kühlcontainer, autarke Telekommunikationsstationen oder elektrische Anlagen.

Zu alternativen Kühlmethoden sind im Stand der Technik verschiedene Verfahren beschrieben.

N. M. Nahar et al., Building and Environment 2003, 38, 109-116 und E. H. Amer, Energy 2006, 31, 1332-1344, beschreiben verschiedene Verfahren, um Häuser in Regionen mit hoher Sonneneinstrahlung und damit auch hohen Temperaturen zu kühlen. Dabei werden einerseits die Dächer der Testhäuser mit reflektierenden Materialien wie weißem Zement oder weißen Fliesen versehen, andererseits werden thermische Isolationsmaterialien wie Vermiculit® auf oder unter dem Dach eingesetzt. Darüber hinaus erfolgt die Kühlung durch Verdampfung von Wasser, beispielsweise aus Jutesäcken, die über das Dach gelegt werden oder aus Wasserbassins, die sich auf dem Dach befinden. Am effizientesten erfolgt die Kühlung durch das Verdampfen von Wasser. Allerdings sind in den in N. M. Nahar et al., Building and Environment 2003, 38, 109-111 und E. H. Amer, Energy 2006, 31, 1332-1344 beschriebenen Verfahren zur Kühlung durch Verdampfung von Wasser relativ große Mengen an Wasser notwendig, die zudem ständig nachgeliefert werden müssen.

D. Karamanis, ICONCE 2014, 33-37, beschreibt poröse Materialien, insbesondere Tonminerale, die in ihren Mikroporen Wasser speichern und Wasser aus diesen verdampfen können.

A. C. C. Rotzetter et al., Advanced Materials 2012, 24, 5352-5356*,* beschreibt den Einsatz von Poly(N-isopropylacrylamid)-Hydrogelen zur Kühlung von Gebäuden. Dabei wird das Poly(N-isopropylacrylamid)-Hydrogel als Folie zwischen eine PVC-Folie und eine nanoporöse Polycarbonatmembran eingebracht. Die Kühlwirkung des Poly(N-isopropylacrylamid)-Hydrogels ist relativ gut, allerdings sind durch die Verwendung als Folie relativ große Mengen an Poly(N-isopropylacrylamid) notwendig. Weiterhin ist die Folie mechanisch sehr empfindlich und nicht überall einsetzbar.

H.-Y. Chang et al., Renewable and Sustainable Energy Reviews 2010, 14, 781-789, beschreiben verschiedene Verfahren, um Häuser passiv zu kühlen und zu heizen. Unter anderem wird die Kühlung durch Verdampfung von Wasser beschrieben. Dabei werden poröse Materialien als Dachmaterial eingesetzt. Zu diesen porösen Materialien zählen Kieselschiefer, Quarzsand, vulkanische Asche, Kiesel, Mörtel und Beton.

Ebenso beschreiben S. van Veen und K. Magano, Building and Environment 2009, 44, 338-351 verschiedene Verfahren zur Kühlung von Häusern mit nicht-porösen und porösen Materialien. Auch bei den in S. van Veen und K. Magano, Building and Environment 2009, 44, 338-351 beschriebenen Verfahren werden als Materialien Kiesel, Quarzsand, vulkanische Asche und Kieselschiefer eingesetzt.

Die in H.-Y. Chang et al., Renewable and Sustainable Energy Reviews 2010, 14, 781-789 und in S. van Veen und K. Magano, Building and Environment 2009, 44, 338-351 beschriebenen Verfahren zur passiven Kühlung von Häusern sind noch verbesserungsbedürftig.

Die US 2015/0291868 beschreibt Kompositmaterialien, die Phasenübergänge eingehen können. Diese Kompositmaterialien sind nanostrukturiert und enthalten ein thermoresponsives Polymer so wie einen nanokristallinen Füllstoff.

Die WO 2015/034475 beschreibt ein Kompositmaterial, das einen hydraulischen Zement, Wasser und ein thermoresponsives Polymer enthält.

Die US 2014/0272282 beschreibt einen thermoresponsiven Aufbau, um einen Temperaturstau in Solarpaneelen zu kontrollieren. Dabei wird eine thermoresponsive Schicht, die ein thermoresponsives Polymer sowie einen anorganischen Füllstoff enthält, eingesetzt.

Die CN103771791 offenbart ein Kompositmaterial, das die Komponenten (A) ein Polymer, (B) einen anorganischen Baustoff und ein Tonmineral, enthält. Ein thermoresponsives Polymer ist nicht beschrieben.

Nachteilig bei den im Stand der Technik beschriebenen Kompositmaterialien ist, dass deren Kühlwirkung teilweise nicht zufriedenstellend ist und sie zudem teilweise mechanisch instabil sind und insbesondere nicht als Formkörper eingesetzt werden können.

Es besteht daher Bedarf an Kompositmaterialien, die dazu geeignet sind, zur Kühlung eingesetzt zu werden. Die Materialien sollen die vorstehend beschriebenen Nachteile der Materialien aus dem Stand der Technik in verringertem Maße oder gar nicht aufweisen.

Gelöst wird diese Aufgabe durch ein Kompositmaterial, das die Komponenten
(A) mindestens ein thermoresponsives Polymer und
(B) mindestens einen anorganischen Baustoff
   enthält.

Gelöst wird diese Aufgabe weiterhin durch ein Kompositmaterial, das die Komponenten
(A) mindestens ein thermoresponsives Polymer und
(B) mindestens einen anorganischen Baustoff
enthält,
wobei das Kompositmaterial zusätzlich eine Komponente (C), mindestens ein Tonmineral, enthält, und wobei die Komponente (C) kein Bindemittel ist, wobei die Komponente (A) eine untere kritische Lösungstemperatur (LCST) aufweist, wobei die untere kritische Lösungstemperatur (LCST) im Bereich von 5 bis 70 °C liegt und
wobei die Komponente (B) ausgewählt ist aus der Gruppe bestehend aus hydraulisch abbindenden Bindemitteln und nicht hydraulisch abbindenden Bindemitteln,
wobei das Kompositmaterial im Bereich von 5 bis 45 Gew.-% der Komponente (A), im Bereich von 10 bis 94,9 Gew.-% der Komponente (B) und im Bereich von 0,1 bis 45 Gew.-% der Komponente (C) enthält, jeweils bezogen auf die Summe der Gewichtsprozente der Komponenten (A), (B) und (C).

Es wurde überraschend gefunden, dass das erfindungsgemäße Kompositmaterial mehr Wasser aufnehmen kann und aufgenommenes Wasser besser freisetzen kann als Materialien, wie sie im Stand der Technik beschrieben sind, beispielsweise als Materialien, die nur ein thermoresponsives Polymer enthalten oder Materialien, die nur einen anorganischen Baustoff enthalten. Daher sind die erfindungsgemäßen Kompositmaterialien besonders gut geeignet für die Kühlung, beispielsweise von Gebäuden, von Außenanlagen, elektrischen Anlagen, Batterien oder Akkumulatoren, durch Verdampfung von Wasser sowie für die Regelung der Luftfeuchte in Innenräumen von Gebäuden, aber auch von Außenanlagen, zum Beispiel von Plätzen, Straßen, Innenhöfen oder Terrassen.

Vorteilhaft ist zudem, dass Wasser, insbesondere bei Temperaturen oberhalb der unteren kritischen Lösungstemperatur (LCST) des mindestens einen thermoresponsiven Polymers (Komponente (A)) aus den erfindungsgemäßen Kompositmaterialien freigesetzt wird. Unterhalb der unteren kritischen Lösungstemperatur (LCST) der Komponente (A) wird nur wenig oder sogar gar kein Wasser aus den erfindungsgemäßen Kompositmaterialien freigesetzt, so dass die kühlende Wirkung der erfindungsgemäßen Kompositmaterialien insbesondere dann erst einsetzt, wenn höhere Temperaturen vorliegen, wenn also eine Kühlung tatsächlich erwünscht ist. Hat die Komponente (A) ihr Wasser oberhalb der LCST abgegeben, so kann sie bei Unterschreitung der LCST wieder Wasser aufnehmen, beispielsweise aus der Umgebungsluft, und kann dann wieder zur Kühlung eingesetzt werden.

Vorteilhaft ist daher, dass die Wasseraufnahme und Abgabe der erfindungsgemäßen Kompositmaterialien reversibel und durch die Temperatur steuerbar ist. Durch die reversible Wasseraufnahme und Abgabe des Kompositmaterials kann seine kühlende Wirkung auch über lange Zeiträume erhalten bleiben. Die Wasseraufnahme und Abgabe kann durch die natürlichen Aufheiz- und Abkühlphasen der Umgebung des Kompositmaterials gesteuert werden.

Nachfolgend wird die vorliegende Erfindung näher erläutert.

### Kompositmaterial

Erfindungsgemäß enthält das Kompositmaterial die Komponenten (A), mindestens ein thermoresponsives Polymer, und (B), mindestens einen anorganischen Baustoff.

Die Begriffe "Komponente (A)" und "mindestens ein thermoresponsives Polymer" werden im Rahmen der vorliegenden Erfindung synonym gebraucht und besitzen daher die gleiche Bedeutung.

Gleiches gilt für "Komponente (B)" und "mindestens ein anorganischer Baustoff". Diese Begriffe werden im Rahmen der vorliegenden Erfindung ebenfalls synonym gebraucht und besitzen daher die gleiche Bedeutung.

Das erfindungsgemäße Kompositmaterial enthält beispielsweise im Bereich von 0,5 bis 50 Gew.-% der Komponente (A) und im Bereich von 50 bis 99,5 Gew.-% der Komponente (B), jeweils bezogen auf die Summe der Gew.-% der Komponenten (A) und (B), bevorzugt bezogen auf das Gesamtgewicht des Kompositmaterials. Bevorzugt enthält das Kompositmaterial im Bereich von 5 bis 45 Gew.-% der Komponente (A) und im Bereich von 55 bis 95 Gew.-% der Komponente (B), bezogen auf die Summe der Gew.-% der Komponenten (A) und (B), bevorzugt bezogen auf das Gesamtgewicht des Kompositmaterials.

Besonders bevorzugt enthält das Kompositmaterial im Bereich von 20 bis 40 Gew.-% der Komponente (A) und im Bereich von 60 bis 80 Gew.-% der Komponente (B), jeweils bezogen auf die Summe der Gew.-% der Komponenten (A) und (B), bevorzugt bezogen auf das Gesamtgewicht des Kompositmaterials.

Die Komponente (A) des Kompositmaterials liegt üblicherweise verteilt in der Komponente (B) des Kompositmaterials vor.

Die Komponente (A) des Kompositmaterials kann gleichmäßig (homogen) oder ungleichmäßig verteilt in der Komponente (B) des Kompositmaterials vorliegen. Bevorzugt liegt die Komponente (A) gleichmäßig verteilt in der Komponente (B) vor. Die Komponente (A) liegt dann dispergiert in der Komponente (B) vor.

Die Komponente (A) ist dann die disperse Phase, auch innere Phase genannt, die Komponente (B) ist das Dispersionsmedium, auch kontinuierliche Phase genannt.

Gegenstand der vorliegenden Erfindung ist daher auch ein Kompositmaterial, das die Komponente (A) verteilt, bevorzugt gleichmäßig verteilt, in der Komponente (B) enthält.

Gegenstand der vorliegenden Erfindung ist weiterhin auch ein Kompositmaterial, das die Komponente (A) dispergiert in der Komponente (B) enthält.

Das erfindungsgemäße Kompositmaterial enthält zusätzlich eine Komponente (C), mindestens ein Tonmineral, wobei die Komponente (C) kein Bindemittel ist.

Die Begriffe "Komponente (C)" und "mindestens ein Tonmineral" werden im Rahmen der vorliegenden Erfindung synonym gebraucht und besitzen daher die gleiche Bedeutung.

In dieser Ausführungsform enthält das Kompositmaterial beispielsweise im Bereich von 0,5 bis 50 Gew.-% der Komponente (A), im Bereich von 25 bis 99,49 Gew.-% der Komponente (B) und im Bereich von 0,01 bis 50 Gew.-% der Komponente (C), jeweils bezogen auf die Summe der Gew.-% der Komponenten (A), (B) und (C), bevorzugt bezogen auf das Gesamtgewicht des Kompositmaterials.

Bevorzugt enthält das Kompositmaterial dann im Bereich von 5 bis 45 Gew.-% der Komponente (A), im Bereich von 10 bis 94,9 Gew.-% der Komponente (B) und im Bereich von 0,1 bis 45 Gew.-% der Komponente (C), jeweils bezogen auf die Summe der Gew.-% der Komponenten (A), (B) und (C), bevorzugt bezogen auf das Gesamtgewicht des Kompositmaterials.

Besonders bevorzugt enthält das Kompositmaterial dann im Bereich von 10 bis 40 Gew.-% der Komponente (A), im Bereich von 20 bis 89,5 Gew.-% der Komponente (B) und im Bereich von 0,5 bis 20 Gew.-% der Komponente (C), jeweils bezogen auf die Summe der Gew.-% der Komponenten (A), (B) und (C), bevorzugt bezogen auf das Gesamtgewicht des Kompositmaterials.

Gegenstand der vorliegenden Erfindung ist daher auch ein Kompositmaterial, wobei das Kompositmaterial im Bereich von 0,5 bis 50 Gew.-% der Komponente (A), im Bereich von 25 bis 99,49 Gew.-% der Komponente (B) und im Bereich von 0,01 bis 50 Gew.-% der Komponente (C) enthält, jeweils bezogen auf die Summe der Gewichtsprozente der Komponenten (A), (B) und (C).

Die Komponente (C) kann, ebenso wie die Komponente (A), verteilt in der Komponente (B) vorliegen.

Bevorzugt liegen die Komponenten (A) und (C) in der Komponente (B) gleichmäßig verteilt vor.

Liegen die Komponenten (A) und (C) in der Komponente (B) gleichmäßig verteilt vor, so liegen die Komponenten (A) und (C) in der Komponente (B) dispergiert vor.

In dieser Ausführungsform ist es möglich, dass die Komponenten (A) und (C) zwei separate disperse Phasen in der kontinuierlichen Phase der Komponente (B) bilden. Bevorzugt bilden die Komponenten (A) und (C) in der kontinuierlichen Phase der Komponente (B) eine gemeinsame disperse Phase. In dieser Ausführungsform enthält die disperse Phase ein Gemisch der Komponenten (A) und (C).

Wenn die Komponenten (A) und (C) als Gemisch vorliegen, so ist es möglich, dass die Komponente (C) in der Komponente (A) gleichmäßig verteilt vorliegt. Ebenso ist es möglich und erfindungsgemäß bevorzugt, dass die Komponente (C) an der Oberfläche der Komponente (A) angeordnet ist und/oder die Komponente (A) an der Oberfläche der Komponente (C) angeordnet ist.

Es ist darüber hinaus bevorzugt, dass das Kompositmaterial zusätzlich Wasser enthält.

Gegenstand der vorliegenden Erfindung ist somit auch ein Kompositmaterial, das zusätzlich Wasser enthält.

Beispielsweise liegt das Gewichtsverhältnis von enthaltenem Wasser zu dem Kompositmaterial dann im Bereich von 5 zu 100 bis 300 zu 100, bevorzugt im Bereich von 10 zu 100 bis 200 zu 100 und insbesondere bevorzugt im Bereich von 20 zu 100 bis 100 zu 100.

Enthält das erfindungsgemäße Kompositmaterial Wasser, so ist es bevorzugt, dass das Wasser bei Temperaturen unterhalb der unteren kritischen Lösungstemperatur (LCST) der Komponente (A) in der Komponente (A) verteilt vorliegt. Bei Temperaturen oberhalb der unteren kritischen Lösungstemperatur (LCST) der Komponente (A) liegt das Wasser bevorzugt in der Komponente (B) verteilt vor und wird aus dieser verdampft und dabei an die Umgebung abgegeben.

Darüber hinaus kann das Kompositmaterial noch weitere Komponenten enthalten. Derartige weitere Komponenten sind dem Fachmann als solche bekannt und beispielsweise Stabilisatoren, grenzflächenaktive Substanzen, Flammschutzmittel oder Farbstoffe.

Ebenso kann das Kompositmaterial noch weitere Komponenten enthalten, die zur Herstellung der Komponente (A) eingesetzt worden sind, wie beispielsweise Comonomere, Vernetzer, Stabilisatoren und Initiatoren. Weitere Komponenten, die zur Herstellung der Komponente (A) eingesetzt worden sind, sind im Kompositmaterial üblicherweise in der Komponente (A) enthalten.

Beispielsweise enthält das Kompositmaterial im Bereich von 0 bis 50 Gew.-% der weiteren Komponenten, bevorzugt im Bereich von 0,5 bis 20 Gew.-% und insbesondere bevorzugt im Bereich von 1 bis 10 Gew.-%, jeweils bezogen auf das Gesamtgewicht des Kompositmaterials.

Das Kompositmaterial kann außerdem eine Komponente (D), mindestens ein organisches Bindemittel enthalten.

Gegenstand der vorliegenden Erfindung ist daher auch ein Kompositmaterial, wobei dass das Kompositmaterial mindestens eine Komponente (D), mindestens ein organisches Bindemittel enthält.

Beispielsweise enthält das Kompositmaterial im Bereich von 0,5 bis 60 Gew.-%, bevorzugt im Bereich von 2 bis 50 Gew.-% und insbesondere bevorzugt im Bereich von 5 bis 40 Gew.-% der Komponente (D), jeweils bezogen auf das Gesamtgewicht des Kompositmaterials.

Die Gew.-%-Angaben der im Kompositmaterial enthaltenen Komponenten (A) und (B) sowie gegebenenfalls der Komponente (C), der Komponente (D) und der weiteren Komponenten addieren sich üblicherweise zu 100 Gew.-%.

### Komponente (A)

Erfindungsgemäß ist die Komponente (A) mindestens ein thermoresponsives Polymer.

"mindestens ein thermoresponsives Polymer" bedeutet im Rahmen der vorliegenden Erfindung sowohl genau ein thermoresponsives Polymer, als auch eine Mischung aus zwei oder mehreren thermoresponsiven Polymeren.

Unter einem thermoresponsiven Polymer wird im Rahmen der vorliegenden Erfindung ein Polymer verstanden, das bei einer unteren kritischen Lösungstemperatur (LCST) sprunghaft seine Wasserlöslichkeit ändert. Bei Temperaturen unterhalb der unteren kritischen Lösungstemperatur (LCST) weist das Polymer eine gute Wasserlöslichkeit auf, vorzugsweise ist das thermoresponsive Polymer vollständig mit Wasser mischbar, während es bei Temperaturen größer oder gleich der unteren kritischen Lösungstemperatur (LCST) eine schlechte Wasserlöslichkeit aufweist.

Es ist möglich, dass das thermoresponsive Polymer außerdem eine obere kritische Lösungstemperatur (UCST) aufweist. Bei Temperaturen oberhalb der oberen kritischen Lösungstemperatur (UCST) weist das thermoresponsive Polymer dann eine gute Wasserlöslichkeit auf, vorzugsweise ist das thermoresponsive Polymer dann vollständig mit Wasser mischbar. Bei Temperaturen unterhalb der oberen kritischen Lösungstemperatur (UCST) weist das thermoresponsive Polymer eine schlechte Wasserlöslichkeit auf, es liegt also eine Mischungslücke zwischen dem thermoresponsiven Polymer und Wasser vor. Dies ist beispielsweise auch in R. Liu, M. Fraylich und B. R. Saunders, Colloid. Poly. Sci. 2009, 287, 627-643 und V. Aseyev, H. Tenhu und F. M. Winnik, Adv. Polym. Sci. 2011, 242, 29-89, beschrieben.

Unter der unteren kritischen Lösungstemperatur (LCST; lower critical solution temperature) wird also die Temperatur verstanden, bei und oberhalb der das thermoresponsive Polymer und Wasser zwei Phasen bilden, das thermoresponsive Polymer und Wasser also eine Mischungslücke aufweisen.

Gegenstand der vorliegenden Erfindung ist daher auch ein Kompositmaterial, bei dem die Komponente (A) eine untere kritische Lösungstemperatur (LCST) aufweist, wobei die untere kritische Lösungstemperatur (LCST) die Temperatur ist, bei der die Komponente (A) und Wasser zwei Phasen bilden.

Anders ausgedrückt ist Gegenstand der vorliegenden Erfindung außerdem ein Kompositmaterial, bei dem die Komponente (A) eine untere kritische Lösungstemperatur (LCST) aufweist, wobei die untere kritische Lösungstemperatur (LCST) die Temperatur ist, bei der die Komponente (A) und Wasser eine Mischungslücke aufweisen.

Ohne die Erfindung hierauf beschränken zu wollen, besteht die Vorstellung, dass bei Temperaturen unterhalb der unteren kritischen Lösungstemperatur (LCST) das thermoresponsive Polymer als offenkettiges Knäuel vorliegt. Dadurch kann Wasser gut in die Polymerketten eindringen und das Polymer quellen. Bei Temperaturen unterhalb der unteren kritischen Lösungstemperatur (LCST) sind die Wechselwirkungen zwischen dem Wasser und den Polymerketten energetisch vorteilhafter als die Wechselwirkungen der Polymerketten untereinander innerhalb des Knäuels. Im Gegensatz dazu, liegt das thermoresponsive Polymer bei Temperaturen größer oder gleich der unteren kritischen Lösungstemperatur (LCST) als kollabiertes Knäuel vor und die Wechselwirkungen der Polymerketten untereinander innerhalb des Knäuels sind energetisch vorteilhafter als die Wechselwirkungen zwischen dem Wasser und den Polymerketten. Das Wasser wird dann aus dem thermoresponsiven Polymer herausgedrängt und das thermoresponsive Polymer liegt als kompaktes Knäuel vor. Anders ausgedrückt bedeutet dies, dass das thermoresponsive Polymer bei Temperaturen gleich oder oberhalb der unteren kritischen Lösungstemperatur (LCST) Wasser abgibt.

Erfindungsgemäß wird die untere kritische Lösungstemperatur (LCST) mittels dynamischer Differenzkalorimetrie (DDK; differential scanning calorimetry, DSC) oder mittels Trübungsmessung bestimmt. Siehe hierzu auch V. Aseyev, H. Tenhu und F. M. Winnik, Adv. Polym. Sci. 2011, 242, 42 und R. Liu, M. Fraylich und B. R. Saunders, Colloid. Polym. Sci. 2009, 287, 630*.*

Die Komponente (A) weist üblicherweise eine untere kritische Lösungstemperatur (LCST) auf, wobei die untere kritische Lösungstemperatur (LCST) vorzugsweise im Bereich von 5 bis 70 °C liegt, besonders bevorzugt im Bereich von 10 bis 60 °C und insbesondere bevorzugt im Bereich von 15 bis 50 °C, bestimmt mittels dynamischer Differenzkalorimetrie (DDK) oder Trübungsmessung.

Gegenstand der vorliegenden Erfindung ist daher auch ein Kompositmaterial, bei dem die Komponente (A) eine untere kritische Lösungstemperatur (LCST) aufweist, wobei die untere kritische Lösungstemperatur (LCST) im Bereich von 5 bis 70 °C liegt.

Die Komponente (A) weist üblicherweise eine Glasübergangstemperatur (T_{G(A)}) auf. Die Glasübergangstemperatur (T_{G(A)}) der Komponente (A) liegt beispielsweise im Bereich von 15 bis 150 °C, bevorzugt im Bereich von 20 bis 100 °C und insbesondere bevorzugt im Bereich von 30 bis 100 °C, bestimmt mittels dynamischer Differenzkalorimetrie (DDK; differential scanning calorimetry, DSC). Siehe hierzu auch DIN 53765 und DIN 51007.

Es versteht sich von selbst, dass sich die Glasübergangstemperatur (T_{G(A)}) der Komponente (A) auf die wasserfreie Komponente (A) bezieht. Die Glasübergangstemperatur (T_{G(A)}) der Komponente (A) bezieht sich also auf die Glasübergangstemperatur (T_{G(A)}) der reinen Komponente (A).

Darüber hinaus weist die Komponente (A) üblicherweise eine Schmelztemperatur (T_{M(A)}) auf. Die Schmelztemperatur (T_{M(A)}) der Komponente (A) liegt üblicherweise im Bereich von 20 bis 250 °C, bevorzugt im Bereich von 25 bis 200 °C und insbesondere bevorzugt im Bereich von 50 bis 180 °C, bestimmt mittels dynamischer Differenzkalorimetrie (DDK; differential scanning calorimetry, DSC). Siehe hierzu auch DIN 53765.

Als Komponente (A) eignen sich alle Polymere, die thermoresponsiv im Sinne der vorliegenden Erfindung sind. Vorzugsweise ist die Komponente (A) ausgewählt aus der Gruppe bestehend aus Poly(meth)acrylaten, Poly(meth)acrylamiden, Poly(meth)acryloylpyrrolidinen, Poly(meth)acryloylpiperidinen, Poly-N-vinylamiden, Polyoxazolinen, Polyvinyloxazolidonen, Polyvinylcaprolactonen, Polyvinylcaprolactamen, Polyethern, Hydroxypropylcellulosen, Polyvinylethern und Polyphosphoestern. Bevorzugt ist die Komponente (A) ausgewählt aus der Gruppe bestehend aus Poly(meth)acrylaten, Poly(meth)acrylamiden, Poly-N-vinylamiden, Polyoxazolinen, Polyvinylcaprolactamen, Polyethern, Hydroxypropylcellulosen und Polyvinylethern.

In einer weiteren bevorzugten Ausführungsform ist die Komponente (A) ausgewählt aus der Gruppe bestehend aus Poly(meth)acrylaten, Poly(meth)acrylamiden, Poly(meth)acryloylpyrrolidinen, Poly(meth)acryloylpiperidinen, Poly-N-vinylamiden, Polyoxazolinen, Polyvinyloxazolidonen, Polyvinylcaprolactonen, Polyvinylcaprolactamen, Polyethern, Polyvinylethern und Polyphosphoestern. Bevorzugt ist die Komponente (A) ausgewählt aus der Gruppe bestehend aus Poly(meth)acrylaten, Poly(meth)acrylamiden, Poly-N-vinylamiden, Polyoxazolinen, Polyvinylcaprolactamen, Polyethern und Polyvinylethern.

Gegenstand der vorliegenden Erfindung ist daher auch ein Kompositmaterial, bei dem die Komponente (A) ausgewählt ist aus der Gruppe bestehend aus Poly(meth)acrylaten, Poly(meth)acrylamiden, Poly(meth)acryloylpyrrolidinen, Poly(meth)acryloylpiperidinen, Poly-N-vinylamiden, Polyoxazolinen, Polyvinyloxazolidonen, Polyvinylcaprolactonen, Polyvinylcaprolactamen, Polyethern, Hydroxypropylcellulosen, Polyvinylethern und Polyphosphoestern.

Unter Poly(meth)acrylaten werden im Rahmen der vorliegenden Erfindung sowohl Polyacrylate als auch Polymethacrylate sowie deren Copolymere mit anderen Monomeren verstanden.

Geeignete Poly(meth)acrylate sind dem Fachmann als solche bekannt. Vorzugsweise sind die Poly(meth)acrylate ausgewählt aus der Gruppe bestehend aus Poly(methyl-2-isobutyracrylat), Poly[2-(dimethylamino)ethylmethacrylat] (PDMAEMA), Poly[2-(2-ethoxyethoxy)ethylacrylat] (PEEO2A), Poly[2-(2-methoxyethoxy)ethylmethacrylat] (PMEO2MA), Poly(2-hydroxypropylacrylat) (PHPA), Polyhydroxyethylmethacrylat (PolyHEMA) und methoxy-terminierten dendronisierten Poly(meth)acrylaten. Bevorzugte Poly(meth)acrylate sind ausgewählt aus der Gruppe bestehend aus Poly(methyl-2-isobutyracrylat), Poly[2-(dimethylamino)ethylmethacrylat] (PDMAEMA), Poly[2-(2-ethoxyethoxy)ethylacrylat] (PEEO2A), Poly[2-(2-methoxyethoxy)ethylmethacrylat] (PMEO2MA) und Poly(2-hydroxypropylacrylat) (PHPA).

Auch Alkoxy-terminierte hyperverzweigte Poly(meth)acrylate können verwendet werden.

Unter Poly(meth)acrylamiden werden im Rahmen der vorliegenden Erfindung Polyacrylamide, Polymethacrylamide sowie deren Copolymere mit anderen Monomeren verstanden. Diese sind dem Fachmann als solche bekannt. Beispielsweise sind Poly(meth)acrylamide ausgewählt aus der Gruppe bestehend aus Poly(N-n-propylacrylamid) (PnPAAm), Poly(N-isopropylacrylamid) (PNiPAAm), Poly(N-n-propylmethacrylamid) (PnPMAAm), Poly(N-isopropylmethacrylamid) (PiPMAAm), Poly(N-(L)-(1-hydroxymethyl)propylmethacrylamid) (P(L-HMPNAAm)), Poly(N,N-diethylacrylamid) (PDEAAm), Poly(N,N-ethylmethylacrylamid) (PNNEMAAm), Poly(N-ethylmethacrylamid) (PNEMAAm), Poly(N-ethylacrylamid) (PEAAm), Poly(N-ethylmethacrylamid) (PEMAAm) und Poly(N-cyclopropylacrylamid) (PcPAAm). Bevorzugte Poly(meth)acrylamide sind ausgewählt aus der Gruppe bestehend aus Poly(N-n-propylacrylamid) (PnPAAm), Poly(N-isopropylacrylamid) (PNiPAAm), Poly(N-n-propylmethacrylamid) (PnPMAAm), Poly(N-(L)-(1-hydroxymethyl)-propylmethacrylamid) (P(L-HMPNAAm)), Poly(N,N-diethylacrylamid) (PDEAAm), Poly(N-ethylmethacrylamid) (PEMAAm) und Poly(N-cyclopropylacrylamid) (PcPAAm).

Die Bezeichnung Poly(meth)acryloylpyrrolidine umfasst im Rahmen der vorliegenden Erfindung sowohl Polymethacryloylpyrrolidine als auch Polyacryloylpyrrolidine sowie deren Copolymere mit anderen Monomeren. Diese sind dem Fachmann als solche bekannt. Erfindungsgemäß bevorzugt als Poly(meth)acryloylpyrrolidine ist Poly(N-acryloylpyrrolidin).

Im Rahmen der vorliegenden Erfindung umfassen Poly(meth)acryloylpiperidine sowohl Polyacryloylpiperidine als auch Polymethacryloylpiperidine sowie deren Copolymere mit anderen Monomeren. Bevorzugt als Poly(meth)acryloylpiperidine ist Poly(N-acryloyl)piperidin (PAOPip).

Poly-N-vinylamide sind dem Fachmann bekannt und beispielsweise ausgewählt aus der Gruppe, bestehend aus Poly(N-vinylpropylacetamid) und Poly(N-vinylisobutyramid) (PViBAm).

Als Polyoxazoline können alle dem Fachmann bekannten Polyoxazoline eingesetzt werden. Beispielsweise sind die Polyoxazoline ausgewählt aus der Gruppe bestehend aus Poly(2-n-propyl-2-oxazolin) (PnPOz) und Poly(2-isopropyl-2-oxazolin) (PiPOz).

Polyvinyloxazolidone sind dem Fachmann bekannt. Ein geeignetes Polyvinyloxazolidon ist beispielsweise Poly(N-vinyl-5-methyl-2-oxazolidon).

Geeignete Polyvinylcaprolactone sind dem Fachmann bekannt. Bevorzugt sind Poly(N-vinyl)caprolacton und dessen Copolymere.

Geeignete Polyvinylcaprolactame sind dem Fachmann als solche ebenfalls bekannt, beispielsweise Poly(N-vinylcaprolactam) (PVCL).

Geeignete Polyether sind dem Fachmann bekannt. Beispielsweise sind die Polyether ausgewählt aus der Gruppe bestehend aus Poly(ethylenglycol) (PEG), Polyethylenglycol-polypropylenglycol-copolyethern, hydrophob endverkapptem Poly(ethylenoxid-co-propylenoxid) und hyperverzweigten Polyethern. Bevorzugt sind die Polyether mit hydrophoben Gruppen terminiert.

Geeignete Hydroxypropylcellulosen sind dem Fachmann bekannt, beispielsweise Hydroxypropylcellulose (HPC) und Hydroxypropylmethylcellulose (HPMC).

Die Herstellung von Hydroxypropylcellulose und Hydroxypropylmethylcellulose ist dem Fachmann allgemein bekannt, beispielweise durch Reaktion von Cellulose oder Methylcellulose mit Propylenoxid.

Geeignete Polyvinylether sind dem Fachmann als solche bekannt und sind beispielsweise ausgewählt aus der Gruppe bestehend aus Poly(methylvinylether) (PMVEth), Poly(2-methoxyethylvinylether) (PMOVEth), Poly(2-ethoxyethylvinylether) (PEOVEth), Poly(2-(2-ethoxy)ethoxyethylvinylether) und Poly(4-hydroxybutylvinylether).

Zudem sind aus Oligovinylethern, wie Ethylenoxid-vinylether, Propylenoxid-vinylether oder n-Butylenoxid-vinylether, hergestellte Homo- und Copolymere geeignet.

Geeignete Polyphosphoester sind dem Fachmann ebenfalls bekannt und beispielsweise ausgewählt aus der Gruppe bestehend aus Poly(2-ethoxy-2-oxo-1,3,2-dioxaphospholan) und Poly(2-isopropoxy-2-oxo-1,3,2-dioxaphospholan). Poly(2-ethoxy-2-oxo-1,3,2-dioxaphospholan) ist auch bekannt unter dem Namen Poly(ethylethylenphosphat). Poly(2-isopropoxy-2-oxo-1,3,2-dioxaphospholan) ist auch bekannt unter dem Namen Poly(isopropylethylenphosphat).

Besonders bevorzugt ist die Komponente (A) daher ausgewählt aus der Gruppe bestehend aus Poly(methyl-2-isobutyracrylat), Poly[2-(dimethylamino)ethylmethacrylat] (PDMAEMA), Poly[2-(2-ethoxyethoxy)ethylacrylat] (PEEO2A), Poly[2-(2-methoxyethoxy)ethylmethacrylat] (PMEO2MA), Poly(2-hydroxypropylacrylat) (PHPA), Poly(N-n-propylacrylamid) (PnPAAm), Poly(N-isopropylacrylamid) (PNiPAAm), Poly(N-n-propylmethacrylamid) (PnPMAAm), Poly(N-(L)-(1-hydroxymethyl)-propylmethacrylamid) (P(L-HMPNAAm)), Poly(N,N-diethylacrylamid) (PDEAAm), Poly(N-ethylmethacrylamid) (PEMAAm), Poly(N-cyclopropylacrylamid) (PcPAAm), Poly(N-vinylpropylacetamid), Poly(N-vinylisobutyramid) (PViBAm), Poly(2-n-propyl-2-oxazolin) (PnPOz), Poly(2-isopropyl-2-oxazolin) (PiPOz), Polyvinylcaprolactam (PVCL), Polyethylenglycolen (PEG), Polyethylenglycol-polypropylenglycol-copolyethern, hydrophob endverkappten Poly(ethylenoxid-*co*-propylenoxid)polyethern, hyperverzweigten Polyethern, Hydroxypropylcellulose (HPC), Poly(methylvinylether) (PMVEth), Poly(2-methoxyethylvinylether) (PMOVEth), Poly(2-ethoxyethylvinylether) (PEOVEth), Poly(2-(2-ethoxy)ethoxyethylvinylether) und Poly(4-hydroxybutylvinylether).

### Komponente (B)

Erfindungsgemäß ist die Komponente (B) mindestens ein anorganischer Baustoff.

Im Rahmen der vorliegenden Erfindung bedeutet "mindestens ein anorganischer Baustoff" sowohl genau ein anorganischer Baustoff als auch eine Mischung aus zwei oder mehreren anorganischen Baustoffen.

Anorganische Baustoffe sind dem Fachmann bekannt und beispielsweise keramische Baustoffe, Glasbaustoffe, Naturbaustoffe, Schlacken, metallische Baustoffe sowie Bindemittel. Bevorzugt ist die Komponente (B) ausgewählt aus Bindemitteln.

Bindemittel sind dem Fachmann als solche bekannt. Üblicherweise wird zwischen hydraulisch abbindende Bindemitteln und nicht hydraulisch abbindenden Bindemitteln unterschieden.

Es ist daher insbesondere bevorzugt, dass die Komponente (B) ausgewählt ist aus der Gruppe bestehend aus hydraulisch abbindenden Bindemitteln und nicht hydraulisch abbindenden Bindemitteln.

Gegenstand der vorliegenden Erfindung ist daher auch ein Kompositmaterial, bei dem die Komponente (B) ausgewählt ist aus der Gruppe bestehend aus hydraulisch abbindenden Bindemitteln und nicht hydraulisch abbindenden Bindemitteln.

Unter hydraulisch abbindenden Bindemitteln werden Bindemittel verstanden, die sowohl an Luft als auch unter Wasser aushärten können. Im Gegensatz dazu werden unter nicht hydraulisch abbindenden Bindemitteln Bindemittel verstanden, die nur an Luft aushärten können, nicht aber unter Wasser. Nicht hydraulisch abbindende Bindemittel sind üblicherweise nicht wasserbeständig, wenn sie ausgehärtet sind.

Unter "Abbinden" wird im Rahmen der vorliegenden Erfindung der Übergang vom flüssigen in den festen Zustand verstanden, wobei der Übergang auf chemische Prozesse, also die Ausbildung von chemischen Bindungen, zurückzuführen ist. Wenn die Komponente (B) also abbindet, geht sie in den festen Zustand über. Dies wird auch als Aushärten bezeichnet.

Zu den hydraulisch abbindenden Bindemitteln zählen beispielsweise Zement und Gips, zu den nicht hydraulisch abbindenden Bindemitteln zählen beispielsweise Alumosilikate, Luftkalk, Wassergläser sowie Magnesiabinder. Magnesiabinder sind auch bekannt unter dem Namen Magnesitbinder.

Die vorstehend beschriebenen hydraulisch abbindenden Bindemittel und nicht hydraulisch abbindenden Bindemittel sind dem Fachmann als solche bekannt.

Es ist erfindungsgemäß also besonders bevorzugt, dass die Komponente (B) ausgewählt ist aus der Gruppe bestehend aus Zement, Gips, Alumosilikaten, Luftkalk, Wassergläsern und Magnesiabinder.

Der als Komponente (B) eingesetzte mindestens eine anorganische Baustoff, bevorzugt das mindestens eine Bindemittel, kann rein oder als Teil eines Gemisches, wie beispielsweise Putz, Mörtel oder Beton im erfindungsgemäßen Kompositmaterial eingesetzt werden. In diesem Fall enthält die Komponente (B) dann beispielsweise noch weitere Zuschlagsstoffe wie beispielsweise Sande, Gesteinsmehle, Mikrosilica, Flugaschen, Schlacken, Glas, Naturstein, Keramik und/oder Puzzolan, sowie gegebenenfalls Additive wie Schaumbildner, Wasserreduktionsmittel, Entschäumer, Verdicker und/oder Dispergiermittel. Diese Zuschlagstoffe und Additive sind dem Fachmann bekannt.

Putze basieren im Allgemeinen auf Zement oder Gips als Komponente (B) und haben beim Einsatz als Baustoff überwiegend dekorative Funktion.

Mörtel basieren im Allgemeinen auf Zement als Komponente (B) und enthalten Sand und/oder Aggregate, jeweils mit einer Korngröße von < 4 mm als Zuschlagsstoffe.

Betone basieren im Allgemeinen auf Zement als Komponente (B) und enthalten Aggregate mit einer Korngröße von > 4 mm als Zuschlagsstoffe.

Für den Einsatz als Baustoff, insbesondere als Bindemittel, wird die Komponente (B) üblicherweise mit Wasser vermischt. Dieses Wasser wird auch als Anmachwasser bezeichnet. Diese Mischung wird dann beispielsweise in Form gegossen, als Putz auf eine Wand aufgetragen oder in Zwischenräume von Mauerwerk eingebracht, und anschließend ausgehärtet. Dieses Verfahren ist dem Fachmann bekannt.

Wie vorstehend beschrieben wird unter "Abbinden" und "Aushärten" der Übergang vom flüssigen in den festen Zustand verstanden, wobei der Übergang in den festen Zustand auf chemische Reaktionen zurückzuführen ist. Dem Fachmann ist klar, dass das Kompositmaterial daher die Komponente (B) in ausgehärteter Form und daher in reagierter Form enthalten kann.

### Komponente (C)

Das Kompositmaterial enthält zusätzlich eine Komponente (C), mindestens ein Tonmineral.

"Mindestens ein Tonmineral" bedeutet im Rahmen der vorliegenden Erfindung sowohl genau ein Tonmineral als auch eine Mischung aus zwei oder mehreren Tonmineralen.

Unter "Tonmineralen" werden im Rahmen der vorliegenden Erfindung schichtartig aufgebaute anorganische Materialien verstanden. Schichtartig aufgebaute anorganische Materialien sind dem Fachmann als solche bekannt. Bevorzugte schichtartig aufgebaute anorganische Materialien sind schichtartig aufgebaute Silikate.

Die Komponente (C) ist daher bevorzugt mindestens ein schichtartig aufgebautes anorganisches Material, besonders bevorzugt mindestens ein schichtartig aufgebautes Silikat.

Gegenstand der vorliegenden Erfindung ist daher auch ein Kompositmaterial, bei dem die Komponente (C) ein schichtartig aufgebautes anorganisches Material ist.

Die erfindungsgemäß besonders bevorzugten schichtartig aufgebauten Silikate sind dem Fachmann also solche bekannt.

Schichtartig aufgebaute Silikate enthalten üblicherweise Siliziumatome, die tetraedrisch von Sauerstoffatomen umgeben (koordiniert) sind. Erfindungsgemäß besonders bevorzugt sind schichtartig aufgebaute Silikate, die zusätzlich Aluminiumatome, die oktaedrisch von Sauerstoffatomen umgeben (koordiniert) sind, enthalten. Darüber hinaus enthalten schichtartig aufgebaute Silikate üblicherweise weitere Elemente, wie beispielsweise Natrium, Barium oder Calcium.

In den schichtartig aufgebauten Silikaten sind die tetraedrisch von Sauerstoffatomen koordinierten Siliziumatome üblicherweise schichtförmig angeordnet (Tetraederschicht). Ebenso sind die oktaedrisch von Sauerstoffatomen koordinierten Aluminiumatome üblicherweise schichtförmig angeordnet (Oktaederschicht). In den schichtartig aufgebauten Silikaten können sich die Oktaederschichten mit den Tetraederschichten abwechseln, ebenso ist es beispielsweise möglich, dass eine Oktaederschicht auf zwei Tetraederschichten folgt.

Zwischen den Schichten kann das mindestens eine Tonmineral Wasser einlagern. Dadurch quillt das mindestens eine Tonmineral. Die Einlagerung von Wasser in die Schichten des mindestens einen Tonminerals ist reversibel, das Wasser zwischen den Schichten kann also durch Trocknung wieder entfernt werden.

Die Komponente (C) ist daher bevorzugt quellbar.

Unter "quellbar" wird im Rahmen der vorliegenden Erfindung also verstanden, dass die Komponente (C) Wasser zwischen den Schichten einlagern kann und dass dieses Wasser durch Trocknung aus dem Raum zwischen den Schichten wieder entfernt werden kann.

Wenn Wasser zwischen den Schichten der Komponente (C) eingelagert ist, dann ist die Komponente (C) gequollen. Ist kein Wasser zwischen den Schichten der Komponente (C) eingelagert, dann ist die Komponente (C) ungequollen.

Es versteht sich von selbst, dass die Komponente (C) von der Komponente (B) verschieden ist.

Die Komponente (C) weist im Gegensatz zur Komponente (B) keine abbindenden Eigenschaften auf. Die Komponente (C) ist daher kein Bindemittel.

Gegenstand der vorliegenden Erfindung ist daher ein Kompositmaterial, bei dem die Komponente (C) keine abbindenden Eigenschaften aufweist.

Unter "Abbinden" wird im Rahmen der vorliegenden Erfindung wie bereits vorstehend beschrieben der Übergang vom flüssigen in den festen Zustand verstanden, wobei der Übergang auf chemische Prozesse, also die Ausbildung von chemischen Bindungen, zurückzuführen ist. Wenn die Komponente (C) also abbindet, geht sie in den festen Zustand über. Dies wird auch als Aushärten bezeichnet. Bevorzugt bindet die Komponente (C) nicht ab, bevorzugt härtet die Komponente (C) also nicht aus.

Die Komponente (C) ist bevorzugt ausgewählt aus der Gruppe bestehend aus Montmorilloniten und Kaoliniten.

Gegenstand der vorliegenden Erfindung ist daher auch ein Kompositmaterial, bei dem die Komponente (C) ausgewählt ist aus der Gruppe bestehend aus Montmorilloniten und Kaoliniten.

Die Komponente (C) kann als das reine mindestens eine Tonmineral eingesetzt werden. Bevorzugt wird die Komponente (C) als Gestein eingesetzt, das das mindestens eine Tonmineral enthält, gegebenenfalls auch als Mischung mit anderen Begleitmineralien, wie beispielsweise Glimmer, Quarz, Feldspat, Pyrit und/oder Calcit. Gesteine, die das mindestens eine Tonmineral enthalten, sind dem Fachmann bekannt und beispielsweise Kaolin und Bentonit.

Wird die Komponente (C) daher als Gestein eingesetzt, so ist die Komponente (C) bevorzugt ausgewählt aus der Gruppe bestehend aus Kaolin und Bentonit. Gegenstand der vorliegenden Erfindung ist daher auch ein Kompositmaterial, bei dem die Komponente (C) ausgewählt ist aus der Gruppe bestehend aus Kaolin und Bentonit.

Kaolin ist dem Fachmann als solches bekannt. Der Hauptbestandteil von Kaolin ist das Mineral Kaolinit. Darüber hinaus kann Kaolin noch weitere Minerale enthalten. Im Rahmen der vorliegenden Erfindung werden unter der Bezeichnung "Kaolin" außerdem auch die thermisch aktivierten Varianten von Kaolin verstanden, wie beispielsweise Metakaolin.

Bentonit ist dem Fachmann ebenfalls bekannt. Der Hauptbestandteil von Bentonit ist Montmorillonit. Daneben kann Bentonit zusätzlich beispielsweise Quarz, Glimmer, Feldspat, Pyrit oder Calcit enthalten.

### Komponente (D)

Erfindungsgemäß ist die Komponente (D) mindestens ein organisches Bindemittel.

"Mindestens ein organisches Bindemittel" bedeutet im Rahmen der vorliegenden Erfindung sowohl genau ein organisches Bindemittel, aus auch eine Mischung aus zwei oder mehreren organischen Bindemitteln.

Die Begriffe "Komponente (D)" und "mindestens ein organisches Bindemittel" werden im Rahmen der vorliegenden Erfindung synonym gebraucht und besitzen daher die gleiche Bedeutung.

Bei den organischen Bindemitteln (Komponente (D)) wird unterschieden zwischen rein physikalisch härtenden organischen Bindemitteln und solchen, die durch chemische Reaktion härten. Rein physikalisch härtende organische Bindemittel sind Lösungen von Polymeren in organischen Lösungsmitteln und/oder Wasser. Das Härten erfolgt dann, indem das Wasser und/oder das organische Lösungsmittel entfernt wird, üblicherweise durch verdampfen. Durch chemische Reaktionen härtbare organische Bindemittel sind monomere, oligomere oder polymere Verbindungen mit chemisch miteinander reaktiven Gruppen, die in reiner Form oder als Lösung in Wasser oder in einem geeigneten Lösungsmittel in das Kompositmaterial eingebracht werden. Die reaktiven Gruppen sorgen dann mittels einer chemischen Reaktion dafür, dass das organische Bindemittel über einen Zeitraum von wenigen Stunden bis hin zu 30 Tagen zu polymeren Strukturen aushärtet. Das organische Bindemittel kann dabei als Einkomponentensystem oder als Zwei- oder Mehrkomponentensystem eingesetzt werden. Bei Einkomponentensystemen liegen die monomeren, oligomeren oder polymeren Verbindungen mit chemisch miteinander reaktiven Gruppen nebeneinander im System vor. Die Aktivierung zur Reaktion der chemisch miteinander reaktiven Gruppen erfolgt dann über einen Schalt- oder Triggermechanismus, zum Beispiel durch Änderung des pH-Wertes, durch Bestrahlung mit kurzwelligem Licht, durch Wärmezufuhr oder durch Oxidation mit Luftsauerstoff. Bei Zwei- oder Mehrkomponentensystemen liegen die monomeren, oligomeren oder polymeren Verbindungen mit chemisch miteinander reaktiven Gruppen zunächst getrennt vor. Erst durch Mischung der Komponenten wird das organische Bindemittel aktiviert und der Aufbau von Molekulargewicht kann durch chemische Reaktionen stattfinden. Selbstverständlich können auch Kombination aus physikalischem Härten und Härten durch chemische Reaktion in dem organischen Bindemittel zum Tragen kommen.

Geeignete organische Bindemittel sind dem Fachmann bekannt, beispielsweise können Polyurethane, Polyharnstoffe, Polyacrylate, Polystyrole, Polystyrolcopolymere, Polyvinylacetate, Polyether, Alkydharze oder Epoxidharze eingesetzt werden. Die organischen Bindemittel sind von den thermoresponsiven Polymer (A) verschieden und weisen keine LCST auf.

Als physikalisch härtende organische Bindemittel sind wässrige Dispersionen, zum Beispiel Acrylatdispersionen, Ethylenvinylacetatdispersionen, Polyurethandispersionen oder Styrolbutadiendispersionen geeignet. Als chemisch härtende Einkomponentensysteme sind zum Beispiel Polyurethane oder Alkydharze geeignet. Als chemisch härtende Zwei- oder Mehrkomponentensysteme können beispielsweise Epoxidharze, Polyurethane, Polyharnstoffe eingesetzt werden. Organische Bindemittel, die eine Kombination aus physikalischem Härten und Härten durch chemische Reaktion aufweisen können, sind zum Beispiel nachvernetzende Acrylatdispersionen oder nachvernetzende Alkydharzdispersionen.

Physikalisch härtende organische Bindemittel sind üblicherweise filmbildend, durch chemische Reaktion härtende Bindemittel härten üblicherweise durch Vernetzung.

Die organischen Bindemittel können so eingesetzt werden, dass sie bei der Herstellung des Kompositmaterials aushärten, ebenso ist es möglich, dass die Komponente (D) in ausgehärteter Form, zum Beispiel als Kompaktmaterial oder in geschäumter Form eingesetzt wird.

### Herstellung des Kompositmaterials

Das erfindungsgemäße Kompositmaterial kann nach allen dem Fachmann bekannten Verfahren hergestellt werden. Vorzugsweise wird das erfindungsgemäße Kompositmaterial hergestellt durch ein Verfahren, umfassend die Schritte:
a) Bereitstellung einer Mischung (M), die das mindestens eine thermoresponsive Polymer (A) enthält,
b) Mischen der Mischung (M) mit der Komponente (B) unter Erhalt des Kompositmaterials.

Gegenstand der vorliegenden Erfindung ist daher auch ein Verfahren zur Herstellung eines erfindungsgemäßen Kompositmaterials, umfassend die Schritte
a) Bereitstellung einer Mischung (M), die das mindestens eine thermoresponsive Polymer (A) enthält,
b) Mischen der Mischung (M) mit der Komponente (B) unter Erhalt des Kompositmaterials.

Die in Schritt a) bereitgestellte Mischung (M) enthält die Komponente (A). Darüber hinaus kann die Mischung (M) weitere Komponenten enthalten. Die Mischung (M) enthält zusätzlich eine Komponente (C) mindestens ein Tonmineral.

Gegenstand der vorliegenden Erfindung ist daher auch ein Verfahren, bei dem die in Schritt a) bereitgestellte Mischung (M) zusätzlich mindestens ein Tonmineral (C) enthält.

Gegenstand der vorliegenden Erfindung ist weiterhin ein Verfahren zur Herstellung eines erfindungsgemäßen Kompositmaterials umfassend die Schritte
a) Bereitstellung einer Mischung (M), die das mindestens eine thermoresponsive Polymer (A) enthält,
b) Mischen der Mischung (M) mit der Komponente (B) unter Erhalt des Kompositmaterials,
wobei die in Schritt a) bereitgestellte Mischung (M) zusätzlich mindestens ein Tonmineral (C) enthält.

Für die zusätzlich in der Mischung (M) enthaltene Komponente (C) gelten die zuvor beschriebenen Ausführungen und Bevorzugungen für die gegebenenfalls in dem Kompositmaterial enthaltene Komponente (C) entsprechend.

Die a) bereitgestellte Mischung (M) enthält zusätzlich mindestens ein Tonmineral (C), so enthält die Mischung (M) beispielsweise im Bereich von 10 bis 99,5 Gew.-% der Komponente (A) und im Bereich von 0,5 bis 90 Gew.-% der Komponente (C), jeweils bezogen auf die Summe der Gewichtsprozente der Komponenten (A) und (C), bevorzugt bezogen auf das Gesamtgewicht der Mischung (M).

Bevorzugt enthält die Mischung (M) dann im Bereich von 50 bis 99 Gew.-% der Komponente (A) und im Bereich von 1 bis 50 Gew.-% der Komponente (C), jeweils bezogen auf die Summe der Gewichtsprozente der Komponenten (A) und (C), bevorzugt bezogen auf das Gesamtgewicht der Mischung (M).

Insbesondere bevorzugt enthält die Mischung (M) dann im Bereich von 70 bis 95 Gew.-% der Komponente (A) und im Bereich von 5 bis 30 Gew.-% der Komponente (C), jeweils bezogen auf die Summe der Gewichtsprozente der Komponenten (A) und (C), bevorzugt bezogen auf das Gesamtgewicht der Mischung (M).

Die Mischung (M) enthält das mindestens eine thermoresponsive Polymer (A) bevorzugt in Form von Partikeln, ebenso enthält sie das mindestens eine Tonmineral (C) bevorzugt in Form von Partikeln. Die Partikel des mindestens einen thermoresponsiven Polymers (A) weisen beispielsweise einen D50-Wert im Bereich von 200 nm bis 5 mm auf, die Partikel des mindestens einen Tonminerals (C) weisen beispielsweise ein D50-Wert im Bereich von 50 nm bis 3 mm auf, bestimmt mittels Lichtstreuung und/oder Siebung.

Bevorzugt weisen die Partikel des mindestens einen thermoresponsiven Polymers (A) einen D50-Wert im Bereich von 300 nm bis 4 mm und die Partikel des mindestens einen Tonminerals (C) einen D50-Wert im Bereich von 50 nm bis 1 mm auf, bestimmt mittels Lichtstreuung und/oder Siebung.

Insbesondere bevorzugt weisen die Partikel des mindestens einen thermoresponsiven Polymers (A) einen D50-Wert im Bereich von 500 nm bis 3 mm und die Partikel des mindestens einen Tonminerals (C) einen D50-Wert im Bereich von 100 nm bis 0,5 mm auf, bestimmt mittels Lichtstreuung und/oder Siebung.

Gegenstand der vorliegenden Erfindung ist daher auch ein Verfahren, bei dem die im Schritt a) bereitgestellte Mischung (M) das mindestens eine thermoresponsive Polymer (A) in Form von Partikeln enthält und das mindestens eine Tonmineral (C) in Form von Partikeln enthält, wobei die Partikel des mindestens einen thermoresponsiven Polymers (A) einen D50-Wert im Bereich von 200 nm bis 5 mm aufweisen und die Partikel des mindestens einen Tonminerals (C) einen D50-Wert im Bereich von 50 nm bis 3 mm aufweisen, bestimmt mittels Lichtstreuung und/oder Siebung.

Unter dem "D50-Wert" wird die Partikelgröße verstanden, bei der 50 vol.% der Partikel, bezogen auf das Gesamtvolumen der Partikel, kleiner oder gleich dem D50-Wert sind und 50 vol.% der Partikel, bezogen auf das Gesamtvolumen der Partikel, größer als der D50-Wert sind.

Darüber hinaus kann die Mischung (M) mindestens ein Dispersionsmittel enthalten. Als Dispersionsmittel bevorzugt ist Wasser.

Bevorzugt enthält die Mischung (M) kein Wasser, insbesondere bevorzugt enthält die Mischung (M) kein Dispersionsmittel.

Es ist daher bevorzugt, dass die in Schritt a) bereitgestellte Mischung (M) trocken ist.

Unter "trocken" wird im Rahmen der vorliegenden Erfindung verstanden, dass die Mischung (M) weniger als 10 Gew.-%, bevorzugt weniger als 5 Gew.-% und besonders bevorzugt weniger als 3 Gew.-% Wasser enthält, insbesondere bevorzugt enthält die Mischung (M) weniger als 10 Gew.-%, bevorzugt weniger als 5 Gew.-% und insbesondere bevorzugt weniger als 3 Gew.-% Dispersionsmittel, jeweils bezogen auf das Gesamtgewicht der Mischung (M).

Die Mischung (M) kann in Schritt a) nach allen dem Fachmann bekannten Methoden bereitgestellt werden. Bevorzugt wird die Mischung (M) in Schritt a) bereitgestellt durch Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern oder Phosphoestern. Bei der Polymerisation des mindestens einen Monomers wird das mindestens eine thermoresponsive Polymer (A) erhalten.

Besonders bevorzugt wird die Mischung (M) in Schritt a) bereitgestellt durch Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Vinyloxazolidonen, Vinylcaprolactonen, Vinylcaprolactamen und Vinylethern.

Diese Polymerisationen sind dem Fachmann bekannt und beispielsweise radikalische Polymerisationen, Polyadditionen oder Polykondensationen.

Gegenstand der vorliegenden Erfindung ist daher auch ein Verfahren, bei dem die Bereitstellung der Mischung (M) in Schritt a) eine Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, wobei das mindestens eine thermoresponsive Polymer (A) erhalten wird, umfasst.

Unter (Meth)acrylaten werden im Rahmen der vorliegenden Erfindung sowohl Acrylate, als auch Methacrylate verstanden. Geeignete (Meth)acrylate sind dem Fachmann als solche bekannt und beispielsweise ausgewählt aus der Gruppe bestehend aus Methyl-2-isobutyracrylat, 2-(Dimethylamino)ethylmethacrylat, 2-(2-Ethoxyethoxy)ethylacrylat, 2-(2-Methoxyethoxy)ethylmethacrylat, 2-Hydroxyethylmethacrylat und 2-Hydroxypropylacrylat.

Der Begriff (Meth)acrylamide umfasst im Rahmen der vorliegenden Erfindung sowohl Acrylamide als auch Methacrylamide. Geeignete (Meth)acrylamide sind beispielsweise ausgewählt aus der Gruppe bestehend aus N-(n-Propyl)acrylamid, N-Isopropylacrylamid, N-(n-Propyl)methacrylamid, N-Isopropylmethacrylamid, N-(L)-1-Hydroxymethylpropylmethacrylamid, N-N-Diethylacrylamid, N,N-Ethylmethacrylamid und N-Cyclopropylacrylamid.

Der Begriff (Meth)acryloylpyrrolidine umfasst im Rahmen der vorliegenden Erfindung sowohl Acryloylpyrrolidine als auch Methacryloylpyrrolidine. Bevorzugte (Meth)acryloylpyrrolidine sind N-Acryloylpyrrolidine.

Unter (Meth)acryloylpiperidinen werden im Rahmen der vorliegenden Erfindung sowohl Acryloylpiperidine als auch Methacryloylpiperidine verstanden. Bevorzugte (Meth)acryloylpiperidine sind N-Acryloylpiperidine.

Geeignete N-Vinylamide sind dem Fachmann als solche bekannt und beispielsweise N-Vinylpropylacetamid oder N-Vinylisobutyramid.

Geeignete Oxazoline sind dem Fachmann ebenfalls bekannt und beispielsweise ausgewählt aus der Gruppe bestehend aus 2-(n-Propyl)-2-oxazolin und 2-Isopropyl-2-oxazolin.

Geeignete Vinyloxazolidone sind dem Fachmann ebenfalls bekannt. Ein bevorzugtes Vinyloxazolidon ist N-Vinyl-5-methyl-2-oxazolidon.

Geeignete Vinylcaprolactone sind dem Fachmann ebenso bekannt wie Vinylcaprolactame.

Geeignete Alkylenoxide sind dem Fachmann ebenfalls bekannt und beispielsweise ausgewählt aus der Gruppe bestehend aus Ethylenoxid und Propylenoxid.

Geeignete Vinylether sind dem Fachmann ebenfalls bekannt und beispielsweise ausgewählt aus der Gruppe bestehend aus Methylvinylether, 2-Methoxyethylvinylether, 2-Ethoxyethylvinylether, 2-(2-Ethoxy)ethoxyethylvinylether und 4-Hydroxybutylvinylether.

Geeignete Phosphoester sind dem Fachmann bekannt und beispielsweise 2-Ethoxy-2-oxo-1,3,2-dioxaphospholan und 2-Isopropoxy-2-oxo-1,3,2-dioxaphospholan.

Ist das mindestens eine thermoresponsive Polymer (A) ein Copolymer, so versteht es sich von selbst, dass zur Bereitstellung der Mischung (M) in Schritt a) zusätzlich zu dem mindestens einen Monomer, mindestens ein Comonomer eingesetzt wird. Derartige Comonomere sind dem Fachmann bekannt und beispielsweise Styrol, Methylstyrol, C₁-C₆-Alkylacrylate, Divinylbenzol, Diacrylate, vorzugsweise auf Basis von C₂- bis C₆-Diolen, N,N-Methylenbisacrylamid oder [3-(Methacryloylamino)propyl]trimethylammoniumchlorid.

Enthält die in Schritt a) bereitgestellte Mischung (M) zusätzlich eine Komponente (C), so ist es bevorzugt, dass die Polymerisation des mindestens einen Monomeren in Gegenwart des mindestens einen Tonminerals (C) erfolgt.

Gegenstand der vorliegenden Erfindung ist daher auch ein Verfahren, bei dem die Bereitstellung der Mischung (M) in Schritt a) eine Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, wobei das mindestens eine thermoresponsive Polymer (A) erhalten wird in Gegenwart des mindestens einen Tonminerals (C), umfasst.

Die Polymerisation des mindestens einen Monomers kann nach allen dem Fachmann bekannten Methoden erfolgen. Geeignete Methoden zur Polymerisation des mindestens einen Monomers sind beispielsweise eine radikalische Polymerisation, eine Polyaddition oder eine Polykondensation.

Bevorzugt erfolgt die Polymerisation mittels radikalischer Polymerisation in Gegenwart eines Initiators.

Bevorzugt umfasst die Bereitstellung der Mischung (M) in Schritt a) die folgenden Schritte
a1) Bereitstellen einer ersten Dispersion, die das mindestens eine Tonmineral (C), ein Dispersionsmittel, ausgewählt aus der Gruppe bestehend aus Wasser und einem organischen Lösungsmittel und mindestens ein Monomer, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, enthält,
a2) Polymerisation des in der in Schritt a1) in der ersten Dispersion bereitgestellten mindestens einen Monomers in der ersten Dispersion, wobei das mindestens eine thermoresponsive Polymer (A) erhalten wird, unter Erhalt einer zweiten Dispersion, die das mindestens eine Tonmineral (C), das Dispersionsmittel, ausgewählt aus der Gruppe bestehend aus Wasser und einem organischen Lösungsmittel und das mindestens eine thermoresponsive Polymer (A) enthält,
a3) Trocknen der in Schritt a2) erhaltenen zweiten Dispersion unter Erhalt der Mischung (M).

Gegenstand der vorliegenden Erfindung ist daher auch ein Verfahren, bei dem die Bereitstellung der Mischung (M) in Schritt a) die folgenden Schritte umfasst:
a1) Bereitstellen einer ersten Dispersion, die das mindestens eine Tonmineral (C), ein Dispersionsmittel, ausgewählt aus der Gruppe bestehend aus Wasser und einem organischen Lösungsmittel und mindestens ein Monomer ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, enthält,
a2) Polymerisation des in der in Schritt a1) bereitgestellten ersten Dispersion enthaltenen mindestens einen Monomers in der ersten Dispersion, wobei das mindestens eine thermoresponsive Polymer (A) erhalten wird, unter Erhalt einer zweiten Dispersion, die das mindestens eine Tonmineral (C), das Dispersionsmittel und das mindestens eine thermoresponsive Polymer (A) enthält,
a3) Trocknen der in Schritt a2) erhaltenen zweiten Dispersion unter Erhalt der Mischung (M).

"Ein Dispersionsmittel" bedeutet im Rahmen der vorliegenden Erfindung sowohl genau ein Dispersionsmittel als auch eine Mischung aus zwei oder mehreren Dispersionsmitteln.

Das Dispersionsmittel ist erfindungsgemäß ausgewählt aus Wasser und organischen Lösungsmittel, bevorzugt ist das Dispersionsmittel Wasser.

Als organisches Lösungsmittel, das als Dispersionsmittel eingesetzt werden kann, eignen sich alle dem Fachmann bekannten organischen Lösungsmittel. Bevorzugt sind niedrigsiedende organische Lösungsmittel, wobei unter "niedrigsiedenden organischen Lösungsmitteln" organische Lösungsmittel verstanden werden, die eine Siedetemperatur von < 140 °C aufweisen. Derartige organische Lösungsmittel sind dem Fachmann bekannt und beispielsweise ausgewählt aus der Gruppe bestehend aus Methanol, Ethanol, Toluol, Tetrahydrofuran, Xylol, Ethylester und Butylacetat.

Bevorzugt wird in Schritt a1) eine erste Dispersion bereitgestellt, die das mindestens eine Tonmineral (C), das Dispersionsmittel und mindestens ein Monomer ausgewählt aus der Gruppe bestehend aus (Meth)acrylaten, (Meth)acrylamiden, (Meth)acryloylpyrrolidinen, (Meth)acryloylpiperidinen, N-Vinylamiden, Vinyloxazolidonen, Vinylcaprolactonen, Vinylcaprolactamen und Vinylethern, enthält.

Die in Schritt a1) bereitgestellte erste Dispersion enthält beispielsweise im Bereich von 0,5 bis 30 Gew.-% des mindestens einen Tonminerals (C), im Bereich von 40 bis 94,5 Gew.-% des Dispersionsmittels und im Bereich von 5 bis 59,5 Gew.-% des mindestens einen Monomers, jeweils bezogen auf die Summe der Gewichtsprozente des mindestens einen Tonminerals (C), des Dispersionsmittels und des mindestens einen Monomers, bevorzugt bezogen auf das Gesamtgewicht der ersten Dispersion.

Bevorzugt enthält die erste Dispersion im Bereich von 0,5 bis 20 Gew.-% des mindestens einen Tonminerals (C), im Bereich von 50 bis 89,5 Gew.-% des Dispersionsmittels und im Bereich von 10 bis 49,5 Gew.-% des mindestens einen Monomers, jeweils bezogen auf die Summe der Gewichtsprozente des mindestens einen Tonminerals (C), des Dispersionsmittels und des mindestens einen Monomers, bevorzugt bezogen auf das Gesamtgewicht der ersten Dispersion.

Besonders bevorzugt enthält die erste Dispersion im Bereich von 0,5 bis 15 Gew.-% des mindestens einen Tonminerals (C) im Bereich von 60 bis 84,5 Gew.-% des Dispersionsmittels und im Bereich von 15 bis 39,5 Gew.-% des mindestens einen Monomers, jeweils bezogen auf die Summe der Gewichtsprozente des mindestens einen Tonminerals (C), des Dispersionsmittels und des mindestens einen Monomers, bevorzugt bezogen auf das Gesamtgewicht der ersten Dispersion.

Darüber hinaus kann die erste Dispersion zusätzliche Komponenten enthalten. Derartige zusätzliche Komponenten sind beispielsweise Initiatoren oder Comonomere zu dem mindestens einen Monomer.

Geeignete Initiatoren sind dem Fachmann als solche bekannt und werden passend zu dem mindestens einen Monomer ausgewählt. Geeignete Initiatoren sind beispielsweise Ammoniumperoxodisulfat (APS), Kaliumperoxodisulfat (KPS), Aza-Diisobutyronitril (AIBN), Dibenzoylperoxid (DBPO) oder N,N,N',N'-Tetramethylethylendiamin (TEMEDA).

Die erste Dispersion enthält das mindestens eine Monomer üblicherweise gelöst in dem Dispersionsmittel. Sind zusätzliche Komponenten in der Dispersion enthalten, so sind diese üblicherweise ebenfalls in dem Dispersionsmittel gelöst. Das mindestens eine Tonmineral (C) liegt üblicherweise suspendiert in der Lösung des Dispersionsmittels und dem mindestens einen Monomer sowie gegebenenfalls der zusätzlichen Komponenten vor. Das Dispersionsmittel mit dem gelösten mindestens einen Monomer und gegebenenfalls der zusätzlichen Komponenten bildet dann das Dispersionsmedium, auch kontinuierliche Phase genannt, das mindestens eine Tonmineral (C) bildet die disperse Phase, auch innere Phase genannt.

Das mindestens eine Tonmineral (C) kann in der ersten Dispersion in Schritt a1) in gequollenem oder in ungequollenem Zustand vorliegen. Bevorzugt liegt das mindestens eine Tonmineral (C) in gequollenem Zustand vor.

Gegenstand der vorliegenden Erfindung ist daher auch ein Verfahren, bei dem das mindestens eine Tonmineral (C) in der ersten Dispersion in Schritt a1) in gequollenem Zustand vorliegt.

Es ist außerdem bevorzugt, dass zur Bereitstellung der ersten Dispersion in Schritt a1) zunächst das mindestens eine Tonmineral (C) in Wasser gequollen wird und anschließend das mindestens eine Monomer sowie gegebenenfalls die zusätzlichen Komponenten zu dieser Dispersion, die Wasser und das gequollene mindestens eine Tonmineral (C) enthält, gegeben werden.

Es ist außerdem möglich, dass zur Bereitstellung der ersten Dispersion in Schritt a1) zunächst das mindestens eine Tonmineral (C) in Wasser gequollen wird und anschließend das gequollene mindestens eine Tonmineral (C) zu dem Dispersionsmittel, dem mindestens einen Monomer sowie gegebenenfalls den zusätzlichen Komponenten, gegeben wird.

In Schritt a2) wird das in der in Schritt a1) bereitgestellten ersten Dispersion enthaltene mindestens eine Monomer in der ersten Dispersion polymerisiert. Dabei wird das mindestens eine thermoresponsive Polymer (A) erhalten unter Erhalt einer zweiten Dispersion, die das mindestens eine Tonmineral (C), das Dispersionsmittel und das mindestens eine thermoresponsive Polymer (A) enthält.

Die Polymerisation des mindestens einen Monomers unter Erhalt des mindestens einen thermoresponsiven Polymers (A) ist dem Fachmann als solche bekannt.

Die in Schritt a2) erhaltene zweite Dispersion enthält das mindestens eine Tonmineral (C), das Dispersionsmittel und das mindestens eine thermoresponsive Polymer (A).

Beispielsweise enthält die zweite Dispersion im Bereich von 0,5 bis 30 Gew.-% des mindestens einen Tonminerals (C), im Bereich von 40 bis 94,5 Gew.-% des Dispersionsmittels und im Bereich von 5 bis 59,5 Gew.-% des mindestens einen thermoresponsiven Polymers (A), jeweils bezogen auf die Summe der Gewichtsprozente des mindestens einen Tonminerals (C), des Dispersionsmittels und des mindestens einen thermoresponsiven Polymers (A), bevorzugt bezogen auf das Gesamtgewicht der zweiten Dispersion.

Bevorzugt enthält die zweite Dispersion im Bereich von 1 bis 20 Gew.-% des mindestens einen Tonminerals (C), im Bereich von 49,5 bis 94 Gew.-% des Dispersionsmittels und im Bereich von 5 bis 49,5 Gew.-% des mindestens einen thermoresponsiven Polymers (A), jeweils bezogen auf die Summe der Gewichtsprozente des mindestens einen Tonminerals (C), des Dispersionsmittels und des mindestens einen thermoresponsiven Polymers (A), bevorzugt bezogen auf das Gesamtgewicht der zweiten Dispersion.

Besonders bevorzugt enthält die zweite Dispersion im Bereich von 1 bis 15 Gew.-% des mindestens einen Tonminerals (C), im Bereich von 59,5 bis 94 Gew.-% des Dispersionsmittels und im Bereich von 5 bis 39,5 Gew.-% des mindestens einen thermoresponsiven Polymers (A), jeweils bezogen auf die Summe der Gewichtsprozente des mindestens einen Tonminerals (C), des Dispersionsmittels und des mindestens einen thermoresponsiven Polymers (A), bevorzugt bezogen auf das Gesamtgewicht der zweiten Dispersion.

Darüber hinaus enthält die zweite Dispersion üblicherweise noch die zusätzlichen Komponenten, die in der ersten Dispersion enthalten waren. Es ist außerdem möglich, dass die zweite Dispersion noch Reste des mindestens einen Monomers enthält.

Die Summe der Gewichtsprozente des in der zweiten Dispersion enthaltenen mindestens einen Tonminerals (C), des Dispersionsmittels und des mindestens einen thermoresponsiven Polymers (A), sowie gegebenenfalls der zusätzlichen Komponenten ergibt üblicherweise 100 Gew.- %.

Wenn die zweite Dispersion zusätzliche Komponenten enthält, liegen diese üblicherweise gelöst im Dispersionsmittel vor.

Das mindestens eine Tonmineral (C) und das mindestens eine thermoresponsive Polymer (A) liegen in der zweiten Dispersion üblicherweise suspendiert im Dispersionsmittel vor. Das Dispersionsmittel bildet dann das Dispersionsmedium, auch kontinuierliche Phase genannt, das mindestens eine Tonmineral (C) und das mindestens eine thermoresponsive Polymer (A) bilden die disperse Phase, auch innere Phase genannt.

Das mindestens eine Tonmineral (C) und das mindestens eine thermoresponsive Polymer (A) können voneinander separiert in der zweiten Dispersion vorliegen. Ebenso ist es möglich und erfindungsgemäß bevorzugt, dass das mindestens eine Tonmineral (C) und das mindestens eine thermoresponsive Polymer (A) als Gemisch in der zweiten Dispersion vorliegt.

Liegt das mindestens eine Tonmineral (C) und das mindestens eine thermoresponsive Polymer (A) als Gemisch vor, so ist es bevorzugt, dass das mindestens eine thermoresponsive Polymer (A) an die Oberfläche des mindestens einen Tonminerals aufgebracht ist und/oder dass das mindestens eine Tonmineral (C) an die Oberfläche des mindestens einen thermoresponsiven Polymers (A) aufgebracht ist.

Es ist erfindungsgemäß außerdem bevorzugt, dass das mindestens eine Tonmineral (C) während der Polymerisation in Schritt a2) in gequollenem Zustand vorliegt.

Gegenstand der vorliegenden Erfindung ist daher auch ein Verfahren, bei dem das mindestens eine Tonmineral (C) während der Polymerisation in Schritt a2) im gequollenen Zustand vorliegt.

In Schritt a3) wird die in Schritt a2) erhaltene zweite Dispersion unter Erhalt der Mischung (M) getrocknet.

Die in Schritt a2) erhaltene zweite Dispersion kann nach allen dem Fachmann bekannten Methoden getrocknet werden. Beispielsweise mittels Sprühtrocknung, Zentrifugation, Trocknen bei Raumtemperatur, im Vakuum oder bei erhöhten Temperaturen. Selbstverständlich sind auch Kombinationen möglich. Bevorzugt wird die in Schritt a2) erhaltene Dispersion durch Sprühtrocknung getrocknet.

Gegenstand der vorliegenden Erfindung ist daher auch ein Verfahren, bei dem in Schritt a3) die zweite Dispersion mittels Sprühtrocknung getrocknet wird unter Erhalt der Mischung (M).

Es ist daher bevorzugt, dass die Bereitstellung der Mischung (M) in Schritt a) eine Sprühtrocknung des mindestens einen thermoresponsiven Polymers (A) in Gegenwart des mindestens einen Tonminerals (C) umfasst.

Gegenstand der vorliegenden Erfindung ist daher auch ein Verfahren, bei dem die Bereitstellung der Mischung (M) in Schritt a) eine Sprühtrocknung des mindestens einen thermoresponsiven Polymers (A) in Gegenwart des mindestens einen Tonminerals (C) umfasst.

Verfahren zur Sprühtrocknung sind dem Fachmann als solche bekannt.

In Schritt b) wird die Mischung (M) mit der Komponente (B) gemischt unter Erhalt des Kompositmaterials. Die Mischung (M) kann mit der Komponente (B) nach allen dem Fachmann bekannten Methoden gemischt werden.

Beispielsweise können die Mischung (M) und die Komponente (B) trocken miteinander gemischt werden, ebenso ist es möglich, dass die Mischung (M) in Wasser vordispergiert wird und/oder die Komponente (B) zunächst mit Wasser gemischt wird und dann miteinander gemischt werden. Diese Ausführungsform ist bevorzugt.

Üblicherweise wird die Komponente (B) für den Einsatz als Baustoff, insbesondere als Bindemittel, zunächst mit Wasser vermischt, anschließend beispielsweise in Form gegossen, als Putz auf eine Wand aufgebracht und/oder in Zwischenräume von Mauerwerk eingebracht. Dann wird die Komponente (B) ausgehärtet, wobei sie abbindet und fest wird. Daher ist es erfindungsgemäß bevorzugt, dass in Schritt b) die Mischung (M) mit der Komponente (B) und Wasser gemischt wird unter Erhalt eines Gemischs. Dieses Gemisch wird dann ausgehärtet unter Erhalt des Kompositmaterials.

Wie vorstehend beschrieben wird unter "Abbinden" und "Aushärten" der Übergang vom flüssigen in den festen Zustand verstanden, wobei der Übergang in den festen Zustand auf chemische Reaktionen zurückzuführen ist. Dem Fachmann ist klar, dass das Kompositmaterial daher die Komponente (B) und gegebenenfalls auch die Komponenten (A) und (C) in ausgehärteter Form und daher in reagierter Form enthalten kann.

Das Mischen der Mischung (M) mit der Komponente (B) und dem Wasser kann nach allen dem Fachmann bekannten Methoden erfolgen.

Beispielsweise ist es möglich, zunächst die Mischung (M) mit der Komponente (B) jeweils trocken vorzumischen und anschließend dieses Vorgemisch mit Wasser zu mischen unter Erhalt des Gemischs.

Darüber hinaus ist es möglich, dass die Mischung (M) trocken in eine Mischung, die bereits die Komponente (B) und Wasser enthält, zugegeben wird.

Ebenso ist es möglich, dass die Mischung (M) als Dispersion in Wasser vorliegt und die Komponente (B) als Mischung in Wasser vorliegt und diese dann gemischt werden. In dieser Ausführungsform wird der oben beschriebene Schritt a3), also das Trocknen der in Schritt a2) erhaltenen zweiten Dispersion unter Erhalt der Mischung (M), üblicherweise nicht durchgeführt. Stattdessen wird vorzugsweise direkt die zweite Dispersion mit der Komponente (B) als Mischung mit Wasser gemischt.

Darüber hinaus ist es möglich, dass die Mischung (M) als Dispersion in Wasser vorliegt und diese Dispersion dann mit der Komponente (B), die trocken vorliegt, zu mischen unter Erhalt des Gemischs. Diesem Gemisch kann dann gegebenenfalls weiteres Wasser zugegeben werden. In dieser Ausführungsform wird der oben beschriebene Schritt a3), also das Trocknen der in Schritt a2) erhaltenen zweiten Dispersion unter Erhalt der Mischung (M), üblicherweise nicht durchgeführt. Stattdessen wird vorzugsweise direkt die zweite Dispersion mit der trockenen Komponente (B) gemischt.

Wird die Mischung (M) als Dispersion in Wasser eingesetzt, wird also bevorzugt die zweite Dispersion eingesetzt und enthält in einer bevorzugten Ausführungsform die Mischung (M) die Komponente (C), so ist es bevorzugt, dass die Komponente (C) in Schritt b) in gequollenem Zustand vorliegt.

Gegenstand der vorliegenden Erfindung ist daher auch ein Verfahren, bei dem die Mischung (M) die Komponente (C) enthält und die in der Mischung (M) enthaltene Komponente (C) in Schritt b) in gequollenem Zustand vorliegt.

Nachdem die Mischung (M), die Komponente (B) und das Wasser gemischt worden sind, kann das erhaltene Gemisch ausgehärtet werden unter Erhalt des Kompositmaterials.

### Verwendung des Kompositmaterials

Das erfindungsgemäße Kompositmaterial kann insbesondere in Bereichen verwendet werden, in denen eine externe oder interne Kühlung notwendig ist und/oder in denen die Luftfeuchte geregelt werden soll. Vorzugsweise wird das erfindungsgemäße Kompositmaterial für die Kühlung von Gebäuden oder von Außenanlagen eingesetzt. Hierbei kann das erfindungsgemäße Kompositmaterial auf die Außenwände aufgebracht oder in Fassaden eingearbeitet sein um die Außenwände von Gebäuden zu kühlen. Eine weitere Anwendungsmöglichkeit findet sich im Inneren von Gebäuden, hier kann das Kompositmaterial zur Kühlung und zum Feuchtemanagement von Innenräumen eingesetzt werden. Eine weitere Anwendungsmöglichkeit betrifft die Kühlung von Außenanlagen. Hierbei kann das erfindungsgemäße Kompositmaterial in Boden- oder Strassenbeläge, in Dächer, in Konstruktionselemente oder in Begrenzungswände eingearbeitet werden. Eine weitere Anwendungsmöglichkeit betrifft die Kühlung von elektrischen Anlagen und Aggregaten, von Batterien oder Akkumulatoren, von Infrastrukturstationen und Warenlagern, die autark betrieben werden und/oder zur Regelung der Luftfeuchte in Innenräumen von Gebäuden oder von Außenanlagen.

Das erfindungsgemäße Kompositmaterial wird also bevorzugt zur Kühlung von Gebäuden, von Innenräumen, von elektrischen Aggregaten, von Batterien oder von Akkumulatoren, von Außenanlagen, von Außenfassaden und/oder zur Regelung der Luftfeuchte in Innenräumen von Gebäuden verwendet.

Gegenstand der vorliegenden Erfindung ist daher auch die Verwendung eines Kompositmaterials zur Kühlung von Gebäuden, von Innenräumen, von elektrischen Aggregaten, von Batterien oder von Akkumulatoren, von Außenanlagen, von Außenfassaden und/oder zur Regelung der Luftfeuchte in Innenräumen von Gebäuden.

Es besteht die Vorstellung, dass die erfindungsgemäßen Kompositmaterialien unterhalb der unteren kritischen Lösungstemperatur (LCST) der Komponente (A), Wasser aufnehmen. Beispielsweise nehmen die erfindungsgemäßen Kompositmaterialien so viel Wasser auf, dass das Gewichtsverhältnis des aufgenommenen Wassers zum Kompositmaterial im Bereich von 5 zu 100 bis 300 zu 100, bevorzugt im Bereich von 10 zu 100 bis 200 zu 100 und insbesondere bevorzugt im Bereich von 20 zu 100 bis 100 zu 100 liegt.

Das Wasser, das von dem Kompositmaterial aufgenommen wird, kann beispielsweise aus der Umgebung aufgenommen werden, üblicherweise als Niederschlag oder als Luftfeuchtigkeit. Ebenso ist es möglich, das Kompositmaterial gezielt mit Wasser zu befeuchten. Bevorzugt nimmt das Kompositmaterial das Wasser aus der Umgebung auf.

Wenn die Temperatur auf die untere kritische Lösungstemperatur (LCST) der Komponente (A) oder darüber steigt, so gibt das Kompositmaterial das Wasser ab, das sich durch Kapillarkräfte gleichmäßig in dem mindestens einen anorganischen Baustoff des Kompositmaterials verteilt und durch die erhöhte Oberfläche eine optimale Verdampfung des Wassers ermöglicht. Die dafür benötigte Verdampfungswärme wird der Umgebung entzogen, somit kühlt sich das Kompositmaterial ab und damit auch die angrenzende Umgebung.

Nachfolgend wird die vorliegende Erfindung anhand von Beispielen näher erläutert.

### Beispiele

### Herstellung einer Mischung (M) aus den Komponenten (A) und (C)

Es wurden die folgenden Komponenten eingesetzt:

### Monomere:

N-Isopropylacrylamid (NiPAAm) von Wako Chemicals und von TCI Chemicals
N,N'-Methylenbisacrylamid (BIS) von AppliChem und Merck KGaA
[3-(Methacryloylamino)propyl]trimethylammoniumchlorid-Lösung (MAPTAC; 50 Gew.-% in Wasser) von ABCR GmbH

### Tonmineral:

Natriumbentonit: EXM757 von Süd-Chemie

### Initiatoren:

N,N,N',N'-Tetramethylethylendiamin (TEMEDA) von ABCR GmbH
Kaliumperoxodisulfat (KPS) von Fluka
Ammoniumperoxodisulfat (APS) von Grüssing GmbH Analytica

Natriumbentonit (162 g, 113 mmol Natrium) wurde in deionisiertem Wasser (2 l) gequollen. Anschließend wurde weiteres deionisiertes Wasser zugegeben, sodass die Dispersion insgesamt ein Volumen von 12 Litern hatte. NiPAAM (1000 g, 8840 mmol), BIS (50 g, 324 mmol, 5 Gew.-% bezogen auf NiPAAM) und MAPTAC (50 g einer 50 gew-%igen Lösung in Wasser, 113 mmol, 5 Gew.-% bezogen auf NiPAAM) wurden zu der Dispersion gegeben unter Erhalt der ersten Dispersion. Nach dem Entgasen mit Stickstoff wurde die erste Dispersion auf 80 °C erwärmt und KPS (20g, 74 mmol, 2 Gew.-% bezogen auf NiPAAM) zugegeben, um die Polymerisation der Monomere zu initiieren. Die Polymerisation wurde bei 80 °C für 6 Stunden durchgeführt. Nach dem Abkühlen wurden 5 Liter deionisiertes Wasser zugegeben, um die Viskosität der erhaltenen zweiten Dispersion zu reduzieren. Die in der zweiten Dispersion enthaltenen Partikel der Mischung (M) hatten einen Durchmesser im Bereich von 1 bis 2 mm. Der Wasseranteil der zweiten Dispersion lag bei 90 Gew.-%, bezogen auf das Gesamtgewicht der zweiten Dispersion.

Anschließend wurde die zweite Dispersion nach verschiedenen Verfahren getrocknet.

### a) Sprühtrocknung der zweiten Dispersion

Zur Sprühtrocknung wurde ein Nubilosa® LTC-ME-Laborsprühtrockner verwendet. Die Eingangstemperatur wurde auf 165 °C gesetzt, die Ausgangstemperatur wurde durch die injizierte zweite Dispersion auf 85 bis 90 °C geregelt. Die zweite Dispersion wurde durch eine Zweikomponentendüse (Durchmesser 2 mm) mit Pressluft (5 bar) zerstäubt. Die Restfeuchte der erhaltenen Mischung (M) lag bei 3 Gew.-%. Die mittels Sprühtrocknung erhaltene Mischung (M) wird nachfolgend als (M-S) bezeichnet.

### b) Zentrifugation und anschließende Trocknung bei Raumtemperatur

Die erhaltene zweite Dispersion wurde in einer CEPA LS Laborzentrifuge mit einem Polyamid-Filterbeutel mit 4 200 rpm zentrifugiert. Anschließend wurde die erhaltene Mischung für 5 Tage bei Raumtemperatur getrocknet und schließlich gemahlen. Die Restfeuchte der erhaltenen Mischung (M) lag bei 6 Gew.-%. Die mittels Zentrifugation und anschließender Trocknung bei Raumtemperatur erhaltene Mischung (M) wird nachfolgend als (M-Z) bezeichnet.

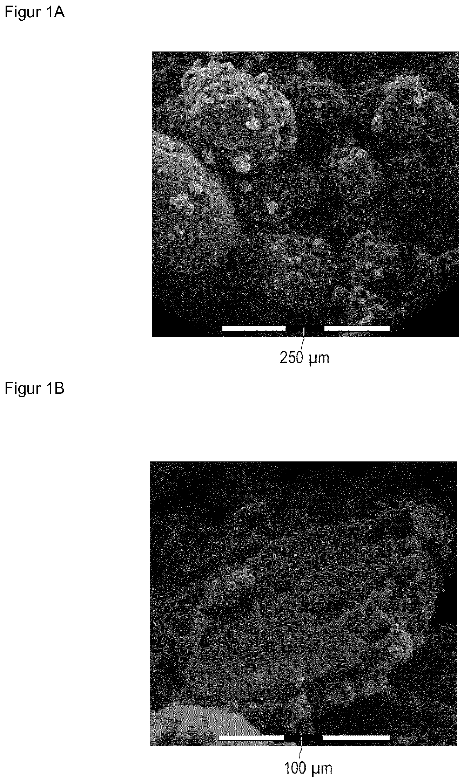

Zur Bestimmung der Morphologie der in M-S und M-Z enthaltenen Partikel wurden die Partikel mittels Environmental Scanning Electron Microscopy (ESEM 2020 der Firma ElectroScan), ausgestattet mit einem GSED-Detektor (gaseous secondary electron detector) analysiert. Die Ergebnisse sind in den Figuren 1a und 1b für (M-S) und 2a und 2b für (M-Z) gezeigt.

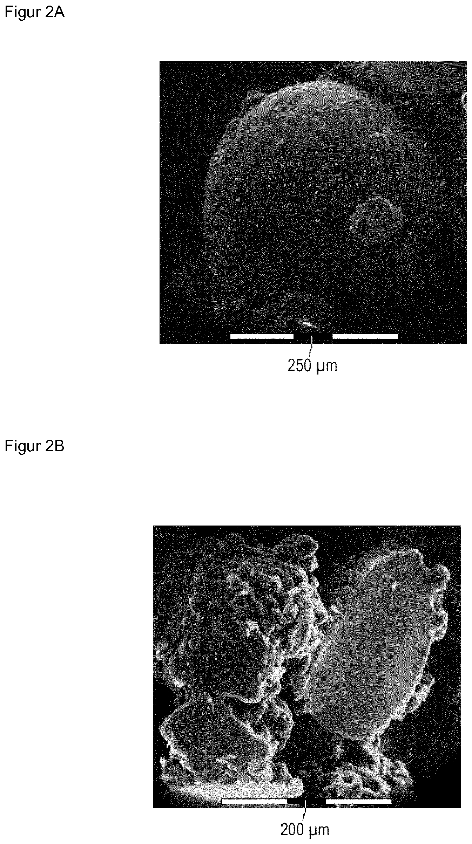

Es ist zu erkennen, dass durch die Sprühtrocknung (Figuren 1a und 1b) deutlich kleinere Partikel mit einem Durchmesser von ca. 100 µm erhalten werden, im Vergleich zu zentrifugierten und anschließend getrockneten Partikeln, deren Durchmesser bei ca. 300 µm liegt (Figuren 2a und 2b). Die Partikel des Tonminerals sind an der Oberfläche des thermoresponsiven Polymers angeordnet.

### Kompositmaterial

Zur Herstellung des Kompositmaterials und der Vergleichsmaterialien wurden die folgenden Komponenten eingesetzt.

### Mischung (M):

### M-S (sprühgetrocknet)

### Komponente (B)

B-a: Portland Zement, CEM I 52,5, Firma Schwenk, Mergelstetten
B-b: Zementmörtel: 11g Portland Zement, 32,9 g Zuschlagsand (Normsand EN 196-1) und 6,1 g Wasser
B-c: Gipsbinder: 50 g α-Hemihydrat Gipsbinder (Knauf A4FF AHH), 45 g Wasser und 0,3 g Stabilisator/Verdicker Starvis® S 3911 F (BASF)
B-d: Geopolymermörtel: 11,1 g Metakaolin (Metamax, BASF SE), 25 g Quarzsand BCS 319 (Strobel Quarzsand GmbH), 14 g Kaliumwasserglas K45 M (Firma Woellner, Ludwigshafen) und 6 g Wasser

Zur Herstellung eines Kompositmaterials, das die Komponente B-a enthält, wurde die trockene Mischung (M) mit der trockenen Komponente B-a gemischt, anschließend Wasser zugegeben, nochmals durchgemischt, die Mischung in eine runde Holzform mit Durchmesser 4 cm und eine Höhe von 2 cm gegeben und das Kompositmaterial für 24 Stunden bei Raumtemperatur ausgehärtet. Anschließend wurden das Material der Form entnommen und die Scheiben durch beidseitiges Glattschleifen der Oberflächen auf eine Dicke von 1 cm gebracht. Diese runden Scheiben wurden in den nachfolgend beschriebenen Messungen als Probenkörper eingesetzt.

Die verwendeten Mengen an Komponente B-a, Wasser und der Mischung (M) sind in Tabelle 1 angegeben.

**Tabelle 1:**

| Beispiel | Zement (B-a) [g] | Wasser [ml] | M-S [g] | M-S [Gew.-% bezogen auf Zement] | Komponente (A) bezogen auf Kompositmateria (Gew.-%) |
|---|---|---|---|---|---|
| V1 | 30 | 15 | - | - | 0 |
| V2 | 30 | 15 | 0,3 | 1 | 0,9 |
| V3 | 30 | 20 | 1,5 | 5 | 4,2 |
| B4 | 30 | 50 | 3,0 | 10 | 7,9 |
| B5 | 24 | 55 | 7,9 | 30 | 21,6 |
| B6 | 20 | 60 | 10 | 50 | 29,1 |
| B7 | 15 | 60 | 9,0 | 60 | 32,7 |
| B8 | 7,5 | 60 | 5,6 | 75 | 37,3 |
| V18 | 7,5 | 60 | 8,5 | 113 | 46,3 |
| V19 | 6 | 60 | 10 | 167 | 54,5 |

Die wie vorstehend beschrieben hergestellten Probenkörper wurden zunächst gewogen, dann in deionisiertes Wasser gegeben und nach 2 Stunden sowie nach 24 Stunden herausgenommen und gewogen. Die Wasseraufnahme, bestimmt als Mittelwert aus vier Messungen, entsprach dabei der Gewichtszunahme nach Abtropfen der Probekörper abzüglich des ursprünglichen Trockengewichts der Probe. Der Wassergehalt der Probekörper wurde dann bezogen auf das Gesamtgewicht der Probe in Gew. % berechnet.

Der Wassergehalt der verschiedenen Probenkörper ist in Tabelle 2 angegeben.

**Tabelle 2**

| | Wassergehalt nach 2h [Gew.-%] | Wassergehalt nach 24h [Gew.-%] |
|---|---|---|
| V1 | 22 | 33 |
| V2 | 23 | 36 |
| V3 | 28 | 45 |
| B4 | 35 | 50 |
| B5 | 51 | 75 |
| B6 | 54 | 72 |
| B7 | 52 | 70 |
| B8 | 50 | 66 |

Für die Beurteilung der Eignung der Kompositmaterialien zur Kühlung, insbesondere von Gebäuden, ist die Geschwindigkeit der Wasseraufnahme und somit der Wassergehalt nach 2 Stunden von großer Bedeutung. Geeignete Materialien zur Kühlung müssen in kurzer Zeit eine möglichst große Menge an Wasser aufnehmen, um effizient zur Kühlung eingesetzt werden zu können.

Es ist zu erkennen, dass die Vergleichsmaterialien in Vergleichsbeispiel V1 bis V3 eine deutlich geringere Wasseraufnahme zeigt als die erfindungsgemäßen Kompositmaterialien der Beispiele B4 bis B8. Es ist außerdem zu erkennen, dass der Anstieg des Wassergehaltes nach zwei Stunden mit dem Anteil an der Mischung (M) in dem Kompositmaterial korreliert und dass bei den Beispielen B5 und B6 ein Maximum in der Aufnahmefähigkeit erreicht wird.

Die Kompositmaterialien der Vergleichsbeispiele V18 und V19 waren nicht formstabil und desintegrierten bei Quellung in Wasser. Es wurden also keine verwertbaren Formkörper erhalten.

### Passive Kühlung

Zur Bestimmung des passiven Kühlungsverhaltens wurden die, wie vorstehend beschrieben, hergestellten Probekörper in einem Winkel von 40° und mit einem Abstand von 35 cm zu einer Infrarotlampe (500 W Halogen) platziert. Über die Probenkörper wurde ein konstanter Luftstrom mit einer Strömungsgeschwindigkeit von 0,1 m/s geleitet. Zur Bestimmung des Temperaturprofils auf der Oberfläche der Materialien wurde eine Infrarotkamera eingesetzt.

Um die Änderung des Wassergehaltes zu bestimmen, wurden die Probenkörper auf eine Waage gelegt und das Gewicht der Probenkörper in Abhängigkeit von der Zeit bestimmt.

Um den Kühleffekt der Materialien zu bestimmen, wurden die Probenkörper jeweils auf eine zugeschnittene Platte eines Polyurethanhartschaumstoffs (Kingspan™ Therma TF70 Fußboden-Dämmplatte, Abmessung 10 x 10 cm, Dicke 3 cm) gelegt und zwischen die Platte des Polyurethanhartschaumstoffs und den Probenkörper ein Thermoelement eingeführt, das die Temperatur auf der Rückseite des Probenkörpers bestimmt.

### a) Oberflächentemperatur und Wassergehalt

Die Oberflächentemperaturen sowie der Wassergehalt des Kompositmaterials gemäß Beispiel B6 und des Vergleichsmaterials gemäß Vergleichsbeispiel V1 wurden über einen Zeitraum von 300 Minuten bestimmt. Der initiale Wassergehalt der Proben (72 Gew-% für B6 bzw. 33 Gew.-% für V1, siehe Tabelle 2) wurde dabei jeweils auf 100% gesetzt und die prozentuale Gewichtsabnahme beider Proben über die Zeit verfolgt.

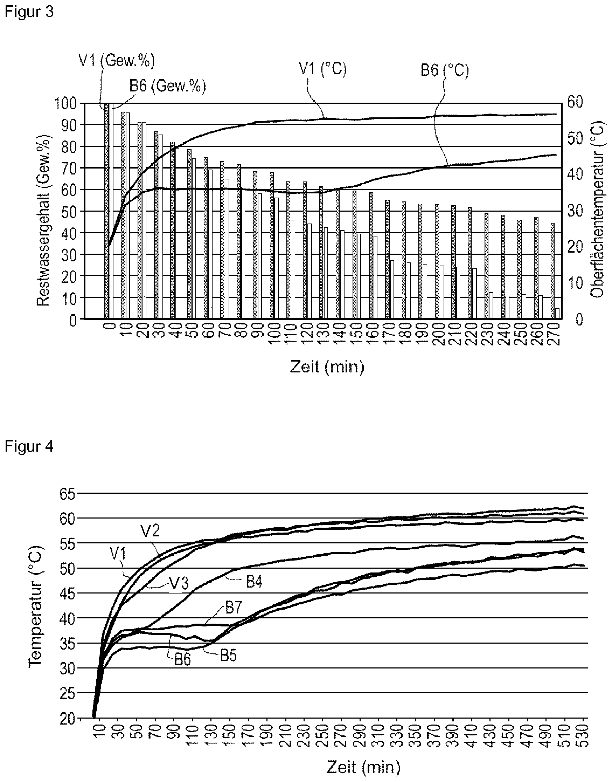

Figur 3 zeigt die Ergebnisse dieses Tests.

Es ist zu erkennen, dass zu Beginn der Messung die Verdampfungsrate des Wassers in beiden Beispielen B6 und V1 identisch ist. Nach etwa 30 Minuten wird aus dem Kompositmaterial gemäß Beispiel B6 jedoch bereits mehr Wasser verdampft. Über die gesamte Messzeit verdampft aus dem Kompositmaterial gemäß Beispiel B6 mehr Wasser als aus dem Vergleichsmaterial gemäß Vergleichsbeispiel V1, so dass bei Beispiel B6 ein geringerer prozentualer Wassergehalt übrig bleibt. Gleichzeitig zeigt das erfindungsgemäße Kompositmaterial B6, bedingt durch die höhere Abdampfrate, eine niedrigere Oberflächentemperatur und damit einen größeren kühlenden Effekt. Der höhere kühlende Effekt des erfindungsgemäßen Kompositmaterials beruht darauf, dass es höhere Wassermengen aufnehmen kann, dieses Wasser aber dann auch bereitwilliger wieder abgibt. Das Vergleichsmaterial zeigt diesen Effekt deutlich weniger ausgeprägt, darüber hinaus wird hier das Wasser weniger bereitwillig an die Umgebung abgegeben.

### b) passive Kühlung

Zur Bestimmung des passiven Kühlungsverhaltens wurde die Oberflächentemperatur der verschiedenen Kompositmaterialien über einen Zeitraum von 530 Minuten bestimmt. Vor der Messung wurden alle Proben für 24 Stunden in deionisiertem Wasser gequollen (siehe Tabelle 2).

Zu Beginn der Messung erhöht sich die Oberflächentemperatur aller Materialien sehr stark. Das Material gemäß Vergleichsbeispiel V1 weist nach 90 Minuten eine Temperatur von etwa 55°C auf, während die erfindungsgemäßen Kompositmaterialien nur eine Temperatur von etwa 33°C bis maximal 38 °C aufweisen. Diese Temperatur wird bei den erfindungsgemäßen Kompositmaterialien für 60 bis 170 Minuten gehalten. Der kühlende Effekt, also die Dauer des Haltens der Temperatur im Bereich von 33 bis maximal 38 °C korreliert direkt mit dem Anteil an Mischungen (M) in den Kompositmaterialien. Das Plateau bei der niedrigsten Temperatur wird für Beispiel B5 erhalten.

### c) Zweischichtmessungen

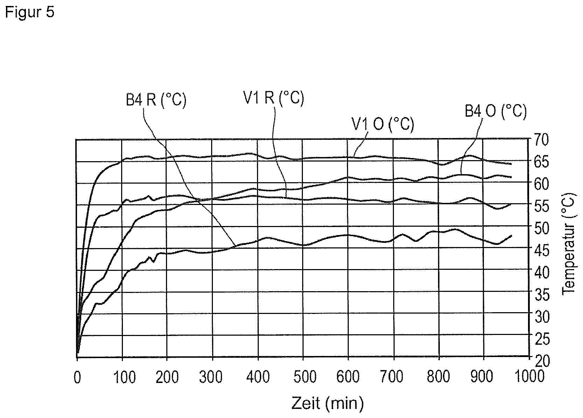

Die Zweischichtmessungen wurden, wie vorstehend beschrieben, durchgeführt. Die Figur 5 zeigt die Oberflächentemperatur (O) sowie die Rückseitentemperatur (R) des Kompositmaterials B4 und des Vergleichsmaterials V1 über den Messzeitraum von 960 min.

Es ist zu erkennen, dass sowohl die Oberflächentemperatur als auch die Rückseitentemperatur des erfindungsgemäßen Kompositmaterials B4 deutlich niedriger ist als die jeweiligen Temperaturen des Vergleichsmaterials V1. Mit dem erfindungsgemäßen Kompositmaterial wird daher ein höherer Kühlungseffekt als mit dem Vergleichsmaterial erzielt.

### Passives Kühlungsverhalten vom Kompositmaterialien enthaltend Komponenten B-b bis B-d

Zur Herstellung eines Kompositmaterials, das die Komponenten B-b bis B-d enthält, wurde die trockene Mischung (M) mit den trockenen Komponenten B-b, B-c oder B-d gemischt. Es wurden jeweils so viel Mischung (M) zugegeben, dass das Kompositmaterial 10 Gew.-% der Mischung (M) bezogen auf die Komponente B enthielt. Anschließend wurde Wasser zugegeben, gut gemischt, die Mischung in eine Holzform mit einem Durchmesser von 4 cm und einer Höhe von 3 cm gegeben und das Kompositmaterial für 12 Stunden bei Raumtemperatur und 65% Luftfeuchte sowie weitere 12 Stunden bei 50°C im Trockenschrank ausgehärtet. Anschließend wurden die Kompositmaterialien der Form entnommen und die Scheiben durch beidseitiges Glattschleifen der Oberflächen auf eine Dicke von 2 cm gebracht. Diese runden Scheiben wurden in den nachfolgend beschriebenen Messungen als Probenkörper eingesetzt.

Die Probenkörper wurden zunächst gewogen, dann in deionisiertes Wasser gegeben und nach 24 Stunden herausgenommen und nochmals gewogen. Die Wasseraufnahme, bestimmt als Mittelwert aus vier Messungen, entsprach dabei der Gewichtszunahme nach Abtropfen der Probekörper abzüglich des ursprünglichen Trockengewichts der Probe. Der Wassergehalt der Probekörper wurde dann bezogen auf das Gesamtgewicht der Probe in Gew.-% berechnet.

Die Zusammensetzung der Kompositmaterialien und Wassergehalt nach 24 h sind in Tabelle 3 angegeben

**Tabelle 3:**

| Beispiel | Komponente B | M-S [Gew.-%] | Wassergehalt nach 24h [Gew.-%] |
|---|---|---|---|
| V9 | Zementmörtel (B-b) | 0 | 7,5 |
| B10 | Zementmörtel (B-b) | 10 | 33,6 |
| V11 | Gipsbinder (B-c) | 0 | 60,5 |
| B12 | Gipsbinder (B-c) | 10 | 90,3 |
| V13 | Geopolymermörtel (B-d) | 0 | 21,9 |
| B14 | Geopolymermörtel (B-d) | 10 | 36,1 |

Auch hier ist zu erkennen, dass die Vergleichsmaterialien V9, V11 und V13 eine deutlich geringere Wasseraufnahme zeigen als die erfindungsgemäßen Kompositmaterialien der Beispiele B10, B12 und B14.

Die Kompositmaterialien wurden außerdem auf ihr passives Kühlungsverhalten hin untersucht. Dazu wurden aus einer Aerogel-Platte von 40 x 40 x 2 cm mit einer niedrigen thermischen Leitfähigkeit (0,019 W/mK, Slentex Aerogel, BASF Polyurethanes GmbH) 39 mm durchmessende Löcher ausgestanzt und die Probekörper der Kompositmaterialien B10, B12 und B14 sowie die Vergleichsprobekörper V9, V11 und V13 in die Löcher eingebracht. Die Oberfläche der Versuchsanordnung wurde mit einer 500 W Halogenlampe belichtet und die Unterseite mit einer Infrarotkamera beobachtet, um die Rückseitentemperaturen zu bestimmen. Vor dem Einbringen in das Aerogel wurden die Kompositmaterialien wie oben beschrieben für 24 Stunden vollständig in Wasser gequollen. Die Belichtungsdauer betrug 300 min., die Temperaturen der Rückseiten der Muster V9 und B10, V11 und B12 und V13 und B14 wurden am Ende der Meßzeit bestimmt und die Temperaturdifferenz zwischen den Wertepaaren berechnet. Die erfindungsgemäßen Kompositmaterialien wiesen am Ende der Messungen jeweils die geringeren Rückseitentemperaturen auf. Die Ergebnisse sind in Tabelle 4 zu sehen.

**Tabelle 4:**

| Beispiel | Probekörper im Vergleich | Temperaturdifferenz (°C) |
|---|---|---|
| B15 | V9 - B10 | 6,4 |
| B16 | V11 - B12 | 5,6 |
| B17 | V13 - B14 | 2,1 |

## Patentansprüche

1. Kompositmaterial, das die Komponenten
(A) mindestens ein thermoresponsives Polymer und
(B) mindestens einen anorganischen Baustoff
enthält,
wobei das Kompositmaterial zusätzlich eine Komponente (C), mindestens ein Tonmineral, enthält,
wobei die Komponente (A) eine untere kritische Lösungstemperatur (LCST) aufweist, wobei die untere kritische Lösungstemperatur (LCST) im Bereich von 5 bis 70 °C liegt und
wobei die Komponente (B) ausgewählt ist aus der Gruppe bestehend aus hydraulisch abbindenden Bindemitteln und nicht hydraulisch abbindenden Bindemitteln, und wobei die Komponente (C) kein Bindemittel ist,
**dadurch gekennzeichnet, dass** das Kompositmaterial im Bereich von 5 bis 45 Gew.-% der Komponente (A), im Bereich von 10 bis 94,9 Gew.-% der Komponente (B) und im Bereich von 0,1 bis 45 Gew.-% der Komponente (C) enthält, jeweils bezogen auf die Summe der Gewichtsprozente der Komponenten (A), (B) und (C).

2. Kompositmaterial gemäß Anspruch 1, **dadurch gekennzeichnet, dass** die Komponente (A) ausgewählt ist aus der Gruppe bestehend aus Poly(meth)acrylaten, Poly(meth)acrylamiden, Poly(meth)acryloylpyrrolidinen, Poly(meth)acryloylpiperidinen, Poly-N-Vinylamiden, Polyoxazolinen, Polyvinyloxazolidonen, Polyvinylcaprolactonen, Polyvinylcaprolactamen, Polyethern, Hydroxypropylcellulosen, Polyvinylethern und Polyphosphoestern.

3. Kompositmaterial gemäß Anspruch 1 oder 2, **dadurch gekennzeichnet, dass** die Komponente (C) ausgewählt ist aus der Gruppe bestehend aus Montmorilloniten und Kaoliniten.

4. Kompositmaterial gemäß einem der Ansprüche 1 bis 3, **dadurch gekennzeichnet, dass** das Kompositmaterial im Bereich von 10 bis 40 Gew.-% der Komponente (A), im Bereich von 20 bis 89,5 Gew.-% der Komponente (B) und im Bereich von 0,5 bis 20 Gew.-% der Komponente (C) enthält, jeweils bezogen auf die Summe der Gewichtsprozente der Komponenten (A), (B) und (C).

5. Kompositmaterial gemäß einem der Ansprüche 1 bis 4, **dadurch gekennzeichnet, dass** das Kompositmaterial mindestens eine Komponente (D), mindestens ein organisches Bindemittel enthält.

6. Verfahren zur Herstellung eines Kompositmaterials gemäß einem der Ansprüche 1 bis 5, umfassend die Schritte
a) Bereitstellung einer Mischung (M), die das mindestens eine thermoresponsive Polymer (A) enthält,
b) Mischen der Mischung (M) mit der Komponente (B) unter Erhalt des Kompositmaterials,
**dadurch gekennzeichnet, dass** die in Schritt a) bereitgestellte Mischung (M) zusätzlich mindestens ein Tonmineral (C) enthält.

7. Verfahren gemäß Anspruch 6, **dadurch gekennzeichnet, dass** die Bereitstellung der Mischung (M) in Schritt a) eine Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, wobei das mindestens eine thermoresponsive Polymer (A) erhalten wird, umfasst.

8. Verfahren gemäß Anspruch 6 oder 7, **dadurch gekennzeichnet, dass** die Bereitstellung der Mischung (M) in Schritt a) die folgenden Schritte umfasst:
a1) Bereitstellen einer ersten Dispersion, die das mindestens eine Tonmineral (C), ein Dispersionsmittel, ausgewählt aus der Gruppe bestehend aus Wasser und einem organischen Lösungsmittel und mindestens ein Monomer ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, enthält,
a2) Polymerisation des in der in Schritt a1) bereitgestellten ersten Dispersion enthaltenen mindestens einen Monomers in der ersten Dispersion, wobei das mindestens eine thermoresponsive Polymer (A) erhalten wird, unter Erhalt einer zweiten Dispersion, die das mindestens eine Tonmineral (C), das Dispersionsmittel und das mindestens eine thermoresponsive Polymer (A) enthält,
a3) Trocknen der in Schritt a2) erhaltenen zweiten Dispersion unter Erhalt der Mischung (M).

9. Verfahren gemäß einem der Ansprüche 6 bis 8, **dadurch gekennzeichnet, dass** die Bereitstellung der Mischung (M) in Schritt a) eine Sprühtrocknung des mindestens einen thermoresponsiven Polymers (A) in Gegenwart des mindestens einen Tonminerals (C) umfasst.

10. Verfahren gemäß einem der Ansprüche 6 bis 9, **dadurch gekennzeichnet, dass** die im Schritt a) bereitgestellte Mischung (M) das mindestens eine thermoresponsive Polymer (A) in Form von Partikeln enthält und das mindestens eine Tonmineral (C) in Form von Partikeln enthält, wobei die Partikel des mindestens einen thermoresponsiven Polymers (A) einen D50-Wert im Bereich von 200 nm bis 5 mm aufweisen und die Partikel des mindestens einen Tonminerals (C) einen D50-Wert im Bereich von 50 nm bis 3 mm aufweisen, bestimmt mittels Lichtstreuung und/oder Siebung.

11. Verwendung eines Kompositmaterials gemäß einem der Ansprüche 1 bis 5 zur Kühlung von Gebäuden, von Innenräumen, von elektrischen Aggregaten, von Batterien oder von Akkumulatoren, von Außenanlagen, von Außenfassaden und/oder zur Regelung der Luftfeuchte in Innenräumen von Gebäuden:

## Claims

1. Composite material which comprises the components
(A) at least one thermoresponsive polymer and
(B) at least one inorganic building material,
wherein the composite material further comprises a component (C), at least one clay mineral,
wherein the component (A) has a lower critical solution temperature (LCST), wherein the lower critical solution temperature (LCST) is in the range from 5 to 70°C, and
wherein the component (B) is selected from the group consisting of hydraulically setting binders and nonhydraulically setting binders, and wherein the component (C) is not a binder,
**characterized in that** the composite material comprises in the range from 5 to 45 wt% of component (A), in the range from 10 to 94.9 wt% of component (B), and in the range from 0.1 to 45 wt% of component (C), based in each case on the sum of the weight percentages of components (A), (B), and (C).

2. Composite material according to Claim 1, **characterized in that** component (A) is selected from the group consisting of poly(meth)acrylates, poly(meth)acrylamides, poly(meth)acryloylpyrrolidines, poly(meth)acryloylpiperidines, poly-N-vinylamides, polyoxazolines, polyvinyloxazolidones, polyvinylcaprolactones, polyvinylcaprolactams, polyethers, hydroxypropylcelluloses, polyvinyl ethers, and polyphosphoesters.

3. Composite material according to Claim 1 or 2, **characterized in that** component (C) is selected from the group consisting of montmorillonites and kaolinites.

4. Composite material according to any of Claims 1 to 3, **characterized in that** the composite material comprises in the range from 10 to 40 wt% of component (A), in the range from 20 to 89.5 wt% of component (B), and in the range from 0.5 to 20 wt% of component (C), based in each case on the sum of the weight percentages of components (A), (B), and (C).

5. Composite material according to any of Claims 1 to 4, **characterized in that** the composite material comprises at least one component (D), at least one organic binder.

6. Method for producing a composite material according to any of Claims 1 to 5, comprising the steps of
a) providing a mixture (M) which comprises the at least one thermoresponsive polymer (A),
b) mixing the mixture (M) with component (B) to give the composite material,
**characterized in that** the mixture (M) provided in step a) further comprises at least one clay mineral (C).

7. Method according to Claim 6, **characterized in that** the providing of the mixture (M) in step a) comprises a polymerization of at least one monomer selected from the group consisting of (meth)acrylates, (meth)acrylamides, (meth)acryloylpyrrolidines, (meth)acryloylpiperidines, N-vinylamides, oxazolines, vinyloxazolidones, vinylcaprolactones, vinylcaprolactams, alkylene oxides, vinyl ethers, and phosphoesters, to give the at least one thermoresponsive polymer (A).

8. Method according to Claim 6 or 7, **characterized in that** the providing of the mixture (M) in step a) comprises the following steps:
a1) providing a first dispersion which comprises the at least one clay mineral (C), a dispersion medium selected from the group consisting of water and an organic solvent, and at least one monomer selected from the group consisting of (meth)acrylates, (meth)acrylamides, (meth)acryloylpyrrolidines, (meth)acryloylpiperidines, N-vinylamides, oxazolines, vinyloxazolidones, vinylcaprolactones, vinylcaprolactams, alkylene oxides, vinyl ethers, and phosphoesters,
a2) polymerization of the at least one monomer present in the first dispersion provided in step a1), in the first dispersion, to give the at least one thermoresponsive polymer (A), to give a second dispersion which comprises the at least one clay mineral (C), the dispersion medium, and the at least one thermoresponsive polymer (A),
a3) drying the second dispersion obtained in step a2) to give the mixture (M).

9. Method according to any of Claims 6 to 8, **characterized in that** the providing of the mixture (M) in step a) comprises a spray drying of the at least one thermoresponsive polymer (A) in the presence of the at least one clay mineral (C).

10. Method according to any of Claims 6 to 9, **characterized in that** the mixture (M) provided in step a) comprises the at least one thermoresponsive polymer (A) in the form of particles and comprises the at least one clay mineral (C) in the form of particles, wherein the particles of the at least one thermoresponsive polymer (A) have a D50 value in the range from 200 nm to 5 mm, and the particles of the at least one clay mineral (C) have a D50 value in the range from 50 nm to 3 mm, determined by light scattering and/or sieving.

11. Use of a composite material according to any of Claims 1 to 5 for cooling of buildings, of interiors, of electrical assemblies, of batteries or of accumulators, of outdoor facilities, of exterior facades and/or for regulating the humidity in interiors of buildings.

## Revendications

1. Matériau composite, qui contient les composants suivants :
(A) au moins un polymère thermosensible et
(B) au moins un matériau de construction inorganique, le matériau composite contenant en outre un composant (C), au moins un minéral argileux,
le composant (A) présentant une critique inférieure de solubilité (LCST), la température critique inférieure de solubilité (LCST) se situant dans la plage allant de 5 à 70 °C, et
le composant (B) étant choisi dans le groupe constitué par les liants à prise hydraulique et les liants à prise non hydraulique, et le composant (C) n'étant pas un liant,
**caractérisé en ce que** le matériau composite contient dans la plage allant de 5 à 45 % en poids du composant (A), dans la plage allant de 10 à 94,9 % en poids du composant (B) et dans la plage allant de 0,1 à 45 % en poids du composant (C), à chaque fois par rapport à la somme des pourcentages en poids des composants (A), (B) et (C).

2. Matériau composite selon la revendication 1, **caractérisé en ce que** le composant (A) est choisi dans le groupe constitué par les poly(méth)acrylates, les poly(méth)acrylamides, les poly(méth)acryloylpyrrolidines, les poly(méth)acryloylpipéridines, les poly-N-vinylamides, les polyoxazolines, les polyvinyloxazolidones, les polyvinylcaprolactones, les polyvinylcaprolactames, les polyéthers, les hydroxypropylcelluloses, les polyéthers de vinyle et les polyphosphoesters.

3. Matériau composite selon la revendication 1 ou 2, **caractérisé en ce que** le composant (C) est choisi dans le groupe constitué par les montmorillonites et les kaolinites.

4. Matériau composite selon l'une quelconque des revendications 1 à 3, **caractérisé en ce que** le matériau composite contient dans la plage allant de 10 à 40 % en poids du composant (A), dans la plage allant de 20 à 89,5 % en poids du composant (B), et dans la plage allant de 0,5 à 20 % en poids du composant (C), à chaque fois par rapport à la somme des pourcentages en poids des composants (A), (B) et (C).

5. Matériau composite selon l'une quelconque des revendications 1 à 4, **caractérisé en ce que** le matériau composite contient au moins un composant (D), au moins un liant organique.

6. Procédé de fabrication d'un matériau composite selon l'une quelconque des revendications 1 à 5, comprenant les étapes suivantes :
a) la préparation d'un mélange (M), qui contient ledit au moins un polymère thermosensible (A),
b) le mélange du mélange (M) avec le composant (B) avec obtention du matériau composite,
**caractérisé en ce que** le mélange (M) préparé à l'étape a) contient en outre au moins un minéral argileux (C).

7. Procédé selon la revendication 6, **caractérisé en ce que** la préparation du mélange (M) à l'étape a) comprend une polymérisation d'au moins un monomère choisi dans le groupe constitué par les (méth)acrylates, les (méth)acrylamides, les (méth)acryloylpyrrolidines, les (méth)acryloylpipéridines, les N-vinylamides, les oxazolines, les vinyloxazolidones, les vinylcaprolactones, les vinylcaprolactames, les oxydes d'alkylène, les éthers de vinyle et les phosphoesters, ledit au moins un polymère thermosensible (A) étant obtenu.

8. Procédé selon la revendication 6 ou 7, **caractérisé en ce que** la préparation du mélange (M) à l'étape a) comprend les étapes suivantes :
a1) la préparation d'une premier dispersion, qui contient ledit au moins un minéral argileux (C), un agent de dispersion, choisi dans le groupe constitué par l'eau et un solvant organique, et au moins un monomère choisi dans le groupe constitué par les (méth)acrylates, les (méth)acrylamides, les (méth)acryloylpyrrolidines, les (méth)acryloylpipéridines, les N-vinylamides, les oxazolines, les vinyloxazolidones, les vinylcaprolactones, les vinylcaprolactames, les oxydes d'alkylène, les éthers de vinyle et les phosphoesters,
a2) la polymérisation dudit au moins un monomère contenu dans la première dispersion préparée à l'étape a1) dans la première dispersion, ledit au moins un polymère thermosensible (A) étant obtenu, avec obtention d'une deuxième dispersion, qui contient ledit au moins un minéral argileux (C), l'agent de dispersion et ledit au moins un polymère thermosensible (A), a3) le séchage de la deuxième dispersion obtenue à l'étape a2) avec obtention du mélange (M).

9. Procédé selon l'une quelconque des revendications 6 à 8, **caractérisé en ce que** la préparation du mélange (M) à l'étape a) comprend un séchage par pulvérisation dudit au moins un polymère thermosensible (A) en présence dudit au moins un minéral argileux (C).

10. Procédé selon l'une quelconque des revendications 6 à 9, **caractérisé en ce que** le mélange (M) préparé à l'étape a) contient ledit au moins un polymère thermosensible (A) sous la forme de particules et contient ledit au moins un minéral argileux (C) sous la forme de particules, les particules dudit au moins un polymère thermosensible (A) présentant une valeur D50 dans la plage allant de 200 nm à 5 mm, et les particules dudit au moins un minéral argileux (C) présentant une valeur D50 dans la plage allant de 50 nm à 3 mm, déterminée par diffusion de lumière et/ou tamisage.

11. Utilisation d'un matériau composite selon l'une quelconque des revendications 1 à 5 pour le refroidissement de bâtiments, d'espaces intérieurs, d'appareils électriques, de batteries ou d'accumulateurs, d'installations extérieures, de façades extérieures et/ou pour la régulation de l'humidité de l'air dans des espaces intérieurs de bâtiments.
